# EUROPEAN PATENT APPLICATION

(11) **EP 4 847 350 A2**
(43) Date of publication of application: **02.12.2026**
(21) Application number: 26198432.2
(22) Date of filing: 10.10.2023
(51) Int. Cl.: B62D 25/02

(54) **VEHICLE BATTERY CASE**

(30) Priority: 31.10.2022 JP 2022174008; 31.10.2022 JP 2022174009; 31.10.2022 JP 2022174010
(62) Document number(s) of the earlier application(s) in accordance with Art. 76 EPC: 23885479.8 / 4 613 615
(71) Applicant: AISIN CORPORATION, Kariya-shi, Aichi 448-8650 (JP)
(72) Inventor: KAIMAI, Kazuhiro, Kariya, Aichi, 448-8650 (JP); SHIBATA, Shunji, Kariya, Aichi, 448-8650 (JP); SHOBO, Jun, Imizu-shi, Toyama-ken, 934-8588 (JP)
(74) Representative: TBK

(57) **Abstract**

[Solution] A vehicle battery case 10 includes a lower panel 11 on which a battery can be placed, a pair of rocker constituent members 12 joined to both side ends, in a vehicle width direction, of the lower panel 11 and each able to absorb energy of an impact applied from the vehicle width direction, and a battery cross member 15 provided on an upper side of the lower panel 11 and including both ends, in the vehicle width direction, each joined to a corresponding one of the pair of rocker constituent members 12. Front-side end portions of the pair of rocker constituent members 12 are detachably joined to a vehicle body front portion structure forming a front portion of a vehicle body, and rear-side rear ends of the pair of rocker constituent members 12 are detachably joined to a vehicle body rear portion structure forming a rear portion of the vehicle body.

## Description

### TECHNICAL FIELD

The present disclosure relates to a vehicle battery case.

### BACKGROUND ART

Patent Literature 1 and Patent Literature 2 each disclose a vehicle lower portion structure including a vehicle battery case. The vehicle lower portion structure disclosed in Patent Literature 1 includes a battery case that is disposed below a floor panel of a vehicle body and that houses a battery, and a battery case mounting frame that couples a rocker provided on a side, in a vehicle width direction, of the battery case and the battery case and that supports the battery case. The battery case mounting frame includes an upper frame that is joined to the battery case and that supports the battery case, and a lower frame that is formed below the upper frame and that is joined to the rocker. The upper frame forms a side frame of the battery case. The lower frame functions as an energy absorption member that absorbs energy of a load when the load is applied from the vehicle width direction.

In addition, the vehicle lower portion structure disclosed in Patent Literature 2 includes a pair of rockers disposed on both outer sides, in a vehicle width direction, of a floor panel of a vehicle body, and a storage battery module disposed below the floor panel. Each of the pair of rockers is formed in a tubular shape to have a closed cross-sectional shape, and an energy absorption member is disposed thereinside. The storage battery module includes a driving battery (battery pack) and a vehicle battery case that houses the driving battery. In addition, the vehicle battery case includes a lower panel on which the driving battery is placed, and side frames that are joined to both side ends, in the vehicle width direction, of the lower panel and that extend in a vehicle front-rear direction. Moreover, the rocker is disposed on an outer side, in the vehicle width direction, of the side frame. That is, the side frame for the vehicle battery and the rocker are arranged side by side in the vehicle width direction.

Note that when a load (for example, an impact load due to a side collision) is applied to the vehicle including the vehicle lower portion structure described in Patent Literature 2 from a side, the load is absorbed by the energy absorption portion inside the rocker, whereby deformation of the battery case is reduced. Here, in general, when a load is applied to the energy absorption member from an outer side in the vehicle width direction, the energy absorption member is configured to be deformed from the load applied side, that is, from the outer side in the vehicle width direction. That is, the energy absorption member is configured such that a portion forming the outer side, in the vehicle width direction, of the energy absorption portion is more easily deformable than a portion forming an inner side, in the vehicle width direction, thereof. However, in this case, the portion forming the outer side in the vehicle width direction is deformed centered on a portion to which the load is applied, in the energy absorption member, whereby the load is concentrated only on the deformed portion. That is, only the deformed portion in the energy absorption member effectively contributes to energy absorption, and the other portions do not contribute to the energy absorption. For this reason, a load distribution effect may be weakened, which may lead to failure to efficiently absorb the energy of the load. Therefore, further improvement for more effective absorption of energy of a load is desired.

### CITATIONS LIST

### PATENT LITERATURE

Patent Literature 1: JP 2022-124191 A
Patent Literature 2: JP 2018-188124 A

### SUMMARY OF INVENTION

### TECHNICAL PROBLEMS

In view of the above circumstances, one aspect of the present invention provides a vehicle battery case that houses a driving battery, and that enables a further increase in a driving range of a vehicle that travels using electric power supplied from the driving battery. In addition, another aspect of the present invention provides a vehicle battery case that houses a driving battery, and that can more effectively absorb energy of a load.

### SOLUTIONS TO PROBLEMS

A vehicle battery case according to the present disclosure is a vehicle battery case that houses a driving battery configured to supply electric power to a driving source of a vehicle, the vehicle battery case including: a plate-shaped lower panel that is disposed substantially horizontally below a floor panel of a vehicle body, the lower panel including an upper surface on which the driving battery is placed; a pair of rocker constituent members each joined to a corresponding one of both side ends, in a vehicle width direction, of the lower panel and each formed in a tubular shape that extends in a vehicle front-rear direction, each of the pair of rocker constituent members being provided with an energy absorption portion configured to be able to absorb energy of a load applied in a vehicle width direction; and a battery cross member, provided on an upper surface of the lower panel, that extends in a vehicle width direction, the battery cross member including both ends, in a vehicle width direction, each joined to a corresponding one of respective surfaces, on an inner side in a vehicle width direction, of the pair of rocker constituent members. Moreover, the energy absorption portion includes a first load transmission portion that is provided at a position overlapping, as viewed in a vehicle width direction, a floor cross member provided on the floor panel and extending in a vehicle width direction, and a second load transmission portion that is provided at a position overlapping, as viewed in a vehicle width direction, the battery cross member.

According to the present disclosure, by allowing the vehicle battery case to include the rocker constituent members having the configuration described above, it is possible to prevent or reduce deformation of a space for housing the battery due to a load from the outer side in the vehicle width direction even while the vehicle battery case is configured without side frames, and it is also possible to expand the space for housing the battery in the vehicle width direction by configuring the vehicle battery case without the side frames. Note that in the present disclosure, it can be said that "the pair of rocker constituent members also serve as side frames of the vehicle battery case".

Specifically, the rocker constituent member includes the energy absorption portion, and the energy absorption portion includes the first load transmission portion and the second load transmission portion. Thus, when a load (for example, an impact load due to a side collision) is applied from the outer side in the vehicle width direction to the vehicle in which the vehicle battery case according to the present disclosure is mounted, the load is absorbed by the energy absorption portion of the rocker constituent member of the vehicle battery case. Further, the first load transmission portion and the second load transmission portion are disposed to overlap the floor cross member and the battery cross member, respectively, as viewed in the vehicle width direction. Accordingly, a load that cannot be absorbed by the energy absorption portion is distributed to a path transmitted from the first load transmission portion to the floor cross member and a path transmitted from the second load transmission portion to the battery cross member. Thus, it is possible to allow a load transmitted to the floor cross member and the battery cross member to be increased within a range in which deformation of the vehicle battery case can be reduced, as compared with a case in which only one transmission path of the load exists. Therefore, it is possible to prevent or reduce deformation of the space for housing the battery, due to a load from the outer side in the vehicle width direction.

In addition, in the case of the configuration in which the number of paths through which a load is transmitted is two, even when an amount of energy absorbed by the energy absorption portion of the rocker constituent member is reduced as compared with the configuration in which the number of paths is one, it is possible to reduce deformation of the vehicle battery case. That is, it is possible to form the energy absorption portion to be compact. By forming the energy absorption portion to be compact, it is possible to reduce the dimension in the vehicle width direction of the rocker constituent member. In addition, according to the vehicle battery case in accordance with the present disclosure, since the energy absorption portion is provided in the rocker constituent member, it is unnecessary to secure a space for disposing the energy absorption portion, outside the rocker constituent member, and it is possible to further expand, by a space equivalent to this space, the housing space for the driving battery on the lower panel. Thus, it is possible to increase a driving battery mounting capacity.

Further, according to the present disclosure, the pair of tubular rocker constituent members provided on both side ends, in the vehicle width direction, of the lower panel also serve as the side frames of the vehicle battery case. In other words, the side frames of the vehicle battery case are formed by the rockers. Accordingly, as compared with a configuration in which a rocker and a side frame are arranged side by side in the vehicle width direction, it is unnecessary to secure a space for disposing the side frame, and thus, it is possible to expand the housing space for the driving battery on the lower panel, in the vehicle width direction. Thus, it is possible to increase a driving battery mounting capacity. As a result, it is possible to further increase a driving range of the vehicle using electric power supplied from the driving battery as a power source. As a result, it is possible to further expand the housing space for the driving battery on the lower panel in the vehicle width direction, and it is possible to further increase the driving range of the vehicle by mounting more driving batteries in the expanded housing space.

A vehicle battery case according to the present disclosure is a vehicle battery case that houses a driving battery configured to supply electric power to a driving source of a vehicle, the vehicle battery case including: a plate-shaped lower panel that is disposed substantially horizontally below a floor panel of a vehicle body, the lower panel including an upper surface on which the driving battery is placed; and a pair of rocker constituent members each disposed on a corresponding one of both side ends, in a vehicle width direction, of the lower panel, each of the pair of rocker constituent members being provided with an energy absorption portion configured to be able to absorb energy of a load applied in a vehicle width direction. In addition, the energy absorption portion includes a vehicle-inner-side energy absorption portion, and a vehicle-outer-side energy absorption portion joined to the vehicle-inner-side energy absorption portion and formed on an outer side, in a vehicle width direction, relative to the vehicle-inner-side energy absorption portion. Moreover, the vehicle-outer-side energy absorption portion is configured to be less deformable than the vehicle-inner-side energy absorption portion.

According to the present disclosure, the vehicle-outer-side energy absorption portion, forming the outer side, in the vehicle width direction, of the energy absorption portion provided in the rocker constituent member is configured to be less deformable than the vehicle-inner-side energy absorption portion, forming the inner side, in the vehicle width direction, of the energy absorption portion. Thus, when a load (for example, an impact load due to a side collision) is applied to the vehicle battery case from the outer side in the vehicle width direction, the vehicle-inner-side energy absorption portion is compressively deformed in the vehicle width direction in advance of the vehicle-outer-side energy absorption portion. Here, when the vehicle-inner-side energy absorption portion starts to be deformed, the vehicle-outer-side energy absorption portion is in an undeformed state or a less deformed state. Thus, a load applied to the vehicle-outer-side energy absorption portion in the undeformed state or the less deformed state is distributed over the entire range in which the vehicle-outer-side energy absorption portion is disposed, and energy due to the load is absorbed by the vehicle-inner-side energy absorption portion being compressively deformed in a wide range thereof. In this manner, the load is also transmitted to the vehicle-inner-side energy absorption portion over a wide range thereof, and thus it is possible to efficiently absorb the load using the wider range of the vehicle-inner-side energy absorption portion.

The energy that cannot be absorbed by the compressive deformation of the vehicle-inner-side energy absorption portion is absorbed by compressive deformation occurring in the vehicle-outer-side energy absorption portion and deformation to be thrust into the inner side in the vehicle width direction occurring in the rocker constituent member. However, according to the present disclosure, since the amount of energy absorbed by the vehicle-inner-side energy absorption portion can be increased, it is possible to enhance an effect of preventing or reducing the deformation to be thrust into the inner side in the vehicle width direction occurring in the rocker constituent member. Therefore, it is possible to enhance an effect of preventing or reducing contact of the rocker constituent member with the battery occurring by the rocker constituent member being thrust into a space inside which the battery is placed (in other words, an effect of protecting the battery).

A vehicle battery case according to the present disclosure is a vehicle battery case that houses a driving battery configured to supply electric power to a driving source of a vehicle, the vehicle battery case including: a plate-shaped lower panel that is disposed substantially horizontally below a floor panel of a vehicle body, the lower panel including an upper surface on which the driving battery is placed; a pair of rocker constituent members each joined to a corresponding one of both side ends, in a vehicle width direction, of the lower panel and each formed in a tubular shape that extends in a vehicle front-rear direction, the pair of rocker constituent members being configured to be joined to a vehicle body front portion structure forming a front portion of the vehicle body at respective front-side end portions of the pair of rocker constituent members, and being configured to be joined to a vehicle body rear portion structure forming a rear portion of the vehicle body at respective rear-side rear ends of the pair of rocker constituent members, each of the pair of rocker constituent members being internally provided with an energy absorption portion configured to be able to absorb energy of a load applied from a vehicle width direction; and a battery cross member, provided on an upper surface of the lower panel, that extends in a vehicle width direction, the battery cross member including both ends, in a vehicle width direction, each joined to a corresponding one of respective surfaces, on an inner side in a vehicle width direction, of the pair of rocker constituent members.

According to the present disclosure, the pair of tubular rocker constituent members provided on both side ends, in the vehicle width direction, of the lower panel are joined to the vehicle body front portion structure and the vehicle body rear portion structure, whereby the pair of rocker constituent members form rockers of the vehicle body and also serve as the side frames of the vehicle battery case. In other words, a rocker, which is a strength member of the vehicle body, is formed by a member forming the vehicle battery case (a strength member of the vehicle battery case). Therefore, as compared with a configuration in which a rocker and a side frame are arranged side by side in the vehicle width direction, the housing space for the driving battery inside the vehicle battery case is expanded in the vehicle width direction. Thus, it is possible to increase a driving battery mounting capacity. As a result, it is possible to further increase a driving range of the vehicle that obtains driving power from a driving source driven by electric power supplied from the driving battery.

### BRIEF DESCRIPTION OF DRAWINGS

FIG. 1 is an exploded perspective view showing configurations of a battery case and an underbody of a vehicle.
FIG. 2 is an exploded perspective view showing configurations of the battery case and the underbody of the vehicle.
FIG. 3 is a perspective view showing configurations of the battery case and the underbody of the vehicle.
FIG. 4A is a perspective view showing a configuration of a frontward-protruding end portion.
FIG. 4B is a perspective view showing a configuration of the frontward-protruding end portion.
FIG. 5A is a perspective view showing a configuration of a mounting portion.
FIG. 5B is a perspective view showing a configuration of the mounting portion.
FIG. 6 is a cross-sectional view showing a configuration of a rocker constituent member of the battery case.
FIG. 7 is a cross-sectional view showing a configuration of a rocker constituent member of a battery case.

### DESCRIPTION OF EMBODIMENTS

Hereinafter, an embodiment of the present invention will be described. In the following description, a vehicle battery case may also be abbreviated to be referred to as a "battery case". A battery case according to the present embodiment is applied to a vehicle, such as an electric vehicle or a hybrid vehicle, including a motor serving as a driving source for traveling, and is configured to be able to house a driving battery (hereinafter, it may also be simply referred to as a "battery") that supplies electric power to the motor serving as the driving source for traveling. Further, the battery case according to the present embodiment is configured to be mountable to and detachable from an underbody of the vehicle. That is, the battery case according to the present embodiment and the underbody of the vehicle are included in a lower portion structure of the vehicle.

In the following description, respective directions of the battery case and components thereof are defined with reference to directions for the vehicle. In each drawing, the front side of the vehicle is indicated by an arrow Fr, the rear side is indicated by arrow Rr, the right side in the vehicle width direction (left-right direction) is indicated by arrow R, the left side in the vehicle width direction is indicated by arrow L, the upper side is indicated by arrow Up, and the lower side is indicated by arrow Dw. In addition, an outer side in the vehicle width direction (hereinafter, it may also be referred to as "vehicle outer side" or "vehicle-outer-side") may also be indicated by arrow Out, and an inner side in the vehicle width direction (hereinafter, it may also be referred to as the "vehicle inner side" or "vehicle-inner-side") may also be indicated by arrow In.

### (Configuration of Battery Case)

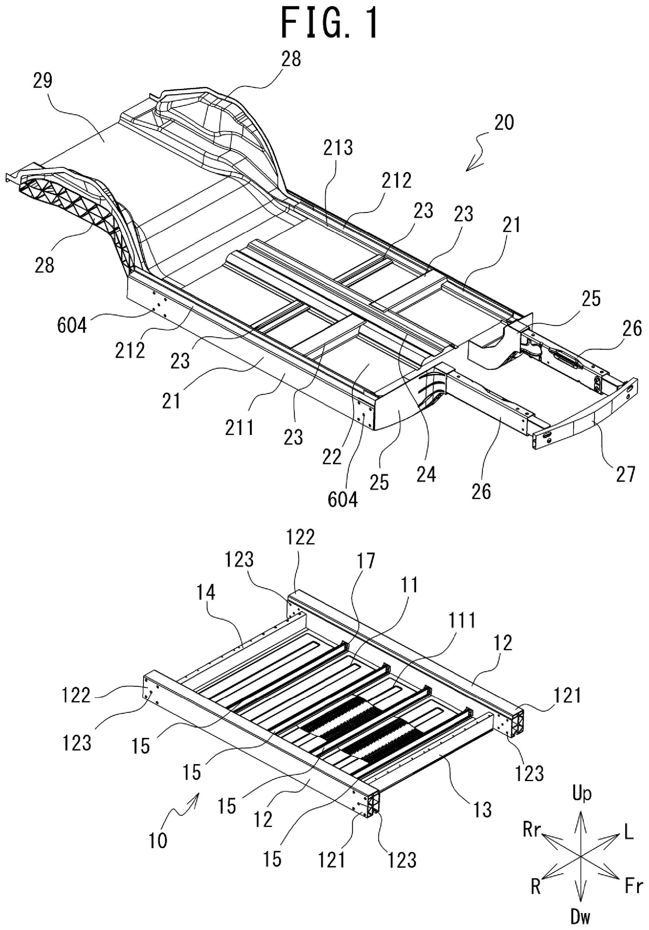

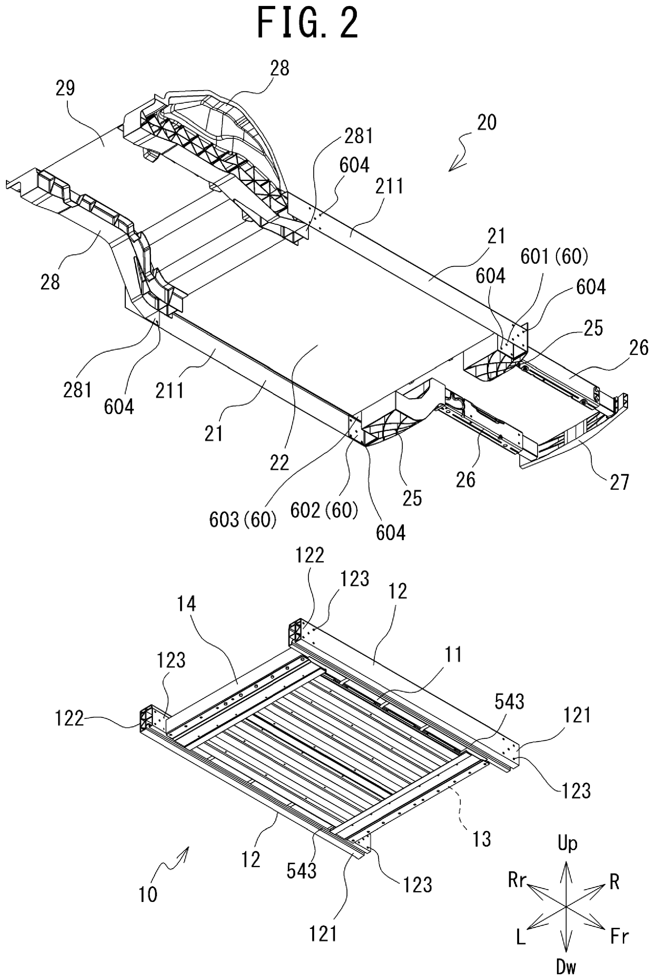

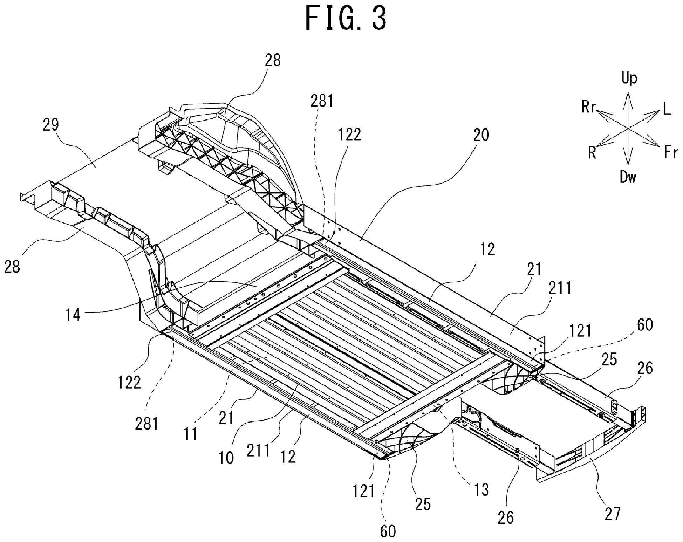

FIGS. 1 to 3 are perspective views each showing configurations of a battery case 10 and an underbody 20 of a vehicle to which the battery case 10 is assembled. Note that FIG. 1 is an exploded perspective view as viewed from obliquely above, FIG. 2 is an exploded perspective view as viewed from obliquely below, and FIG. 3 is a perspective view of a state in which the battery case 10 is assembled to the underbody 20 of the vehicle, as viewed from obliquely below.

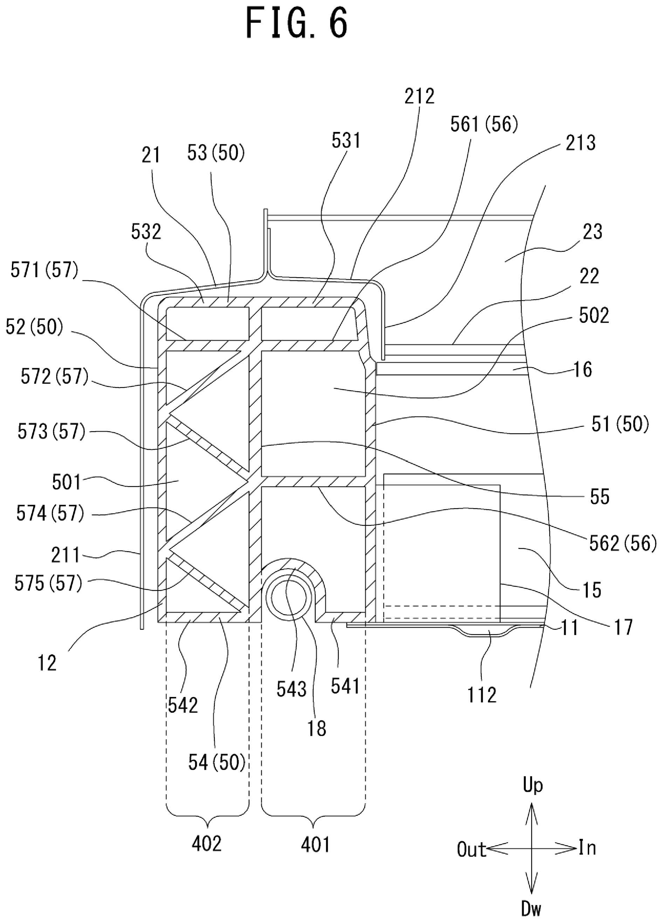

The battery case 10 includes a lower panel 11, a pair of left and right rocker constituent members 12, a front frame 13, a rear frame 14, a plurality of battery cross members 15, and an upper panel 16 (see FIG. 6). Moreover, the battery case 10 is configured to be able to house a battery thereinside. Specifically, the battery case 10 has a substantially quadrilateral shape as viewed in the upper-lower direction (note that front end portions and rear end portions of the pair of left and right rocker constituent members 12 protrude in the front-rear direction, details of which will be described later), and has a box-shaped structure in which the inside is hollow. Moreover, the lower panel 11 corresponds to "the bottom of the box", the upper panel 16 corresponds to "the lid of the box", and the pair of left and right rocker constituent members 12, the front frame 13, and the rear frame 14 correspond to "the side walls of the box".

The lower panel 11 is a plate-shaped member and is disposed substantially horizontally (in directions extending in the vehicle width direction and the front-rear direction). Note that in the present embodiment, the lower panel 11 has a substantially quadrilateral (rectangular) shape as viewed in the upper-lower direction. The lower panel 11 is made of, for example, a plate material of aluminum or an aluminum alloy. A placement surface 111 that is a surface on which a battery can be placed is provided on an upper surface of the lower panel 11. In addition, a temperature control fluid passage 112 configured to allow a temperature control fluid for controlling the temperature of the battery placed on the placement surface 111 to flow therethrough is provided in the lower panel 11 (see FIG. 6). For example, the lower panel 11 includes two plate-shaped members stacked and bonded in the upper-lower direction, and the temperature control fluid passage 112 is provided between the two plate-shaped members.

Each of the pair of left and right rocker constituent members 12 has a tubular structure having a substantially quadrilateral cross section that is taken along a plane perpendicular to a lengthwise direction thereof. An extruded material made of, for example, aluminum or an aluminum alloy is applied to each of the pair of left and right rocker constituent members 12. The pair of left and right rocker constituent members 12 are disposed to be spaced apart from each other in the left-right direction (vehicle width direction), while the lengthwise direction thereof extends in a direction substantially parallel to the front-rear direction of the vehicle. Moreover, each of the pair of left and right rocker constituent members 12 is joined to a corresponding one of both side ends, in the vehicle width direction, of the lower panel 11. More specifically, respective lower surfaces of the pair of left and right rocker constituent members 12 are joined to respective upper surfaces of both side ends, in the vehicle width direction, of the lower panel 11. Each of the pair of left and right rocker constituent members 12 includes energy absorption portions 401, 402 configured to be able to absorb energy of an impact applied from a vehicle outer side (details will be described later).

Each of the front frame 13 and the rear frame 14 has a tubular structure having a space formed thereinside. An extruded material made of, for example, aluminum or an aluminum alloy is applied to each of the front frame 13 and the rear frame 14. The front frame 13 and the rear frame 14 are disposed to be spaced apart from each other in the front-rear direction, while the lengthwise directions thereof extend in a direction substantially parallel to the vehicle width direction. Moreover, the front frame 13 is joined to a front end portion of the lower panel 11, and the rear frame 14 is joined to a rear end portion of the lower panel 11. More specifically, respective lower surfaces of the front frame 13 and the rear frame 14 are respectively joined to respective upper surfaces of the front end portion and the rear end portion of the lower panel 11.

Each of the plurality of battery cross members 15 is formed in a long shape, and is a member having a substantially hat shape in a cross-sectional shape perpendicular to a lengthwise direction thereof (it may also be referred to as a "hat-section member"). An extruded material or a press material made of, for example, aluminum or an aluminum alloy is applied to each of the plurality of battery cross members 15. The plurality of battery cross members 15 are disposed, on an upper side of the lower panel 11, to be spaced apart from each other in the front-rear direction (in other words, arranged side by side in the front-rear direction), while the lengthwise direction of the plurality of battery cross members 15 extends in a direction substantially parallel to the vehicle width direction. Moreover, a lower surface (that is, a portion corresponding to a flange of a hat shape) of each of the plurality of battery cross members 15 is joined (for example, welded) to the upper surface of the lower panel 11. In addition, each of end portions in the lengthwise direction of each of the plurality of battery cross members 15 is joined to a corresponding one of respective surfaces, on the vehicle inner side, of the pair of left and right rocker constituent members 12 through a corresponding one of mounting brackets 17. Note that upper surfaces of the plurality of battery cross members 15 are located below upper surfaces of the pair of left and right rocker constituent members 12 (see FIG. 6). In addition, the configuration of the mounting bracket 17 is not particularly limited. However, the mounting brackets 17 firmly (in other words, in a manner not to allow relative movement between the battery cross member 15 and each of the pair of left and right rocker constituent members 12) join the battery cross member 15 and the pair of left and right rocker constituent members 12 such that a load in the vehicle width direction applied to each of the pair of left and right rocker constituent members 12 can be transmitted to the battery cross member 15.

The plurality of battery cross members 15 have a function of increasing rigidity (difficulty in deformation) in the vehicle width direction of battery case 10. That is, when a side collision or the like occurs in the vehicle, an impact load (force) to press into the vehicle inner side is applied to a corresponding one of the pair of left and right rocker constituent members 12. The plurality of battery cross members 15 receive such a load, whereby the plurality of battery cross members 15 prevent or reduce contact of the pair of left and right rocker constituent members 12 with the battery occurring by the pair of left and right rocker constituent members 12 being deformed to be thrust into the vehicle inner side.

The upper panel 16 (not shown in FIG. 1, see FIG. 6) is a plate-shaped member having a substantially quadrilateral shape as viewed in the upper-lower direction, and is disposed substantially horizontally. The upper panel 16 is made of, for example, a plate material of aluminum or an aluminum alloy. The upper panel 16 is disposed between the pair of left and right rocker constituent members 12. The upper panel 16 is disposed on the upper side of the lower panel 11, the front frame 13, the rear frame 14, and the plurality of battery cross members 15 such that the upper panel 16 covers them. Note that the upper panel 16 is disposed below the upper surfaces of the pair of left and right rocker constituent members 12. That is, an upper surface of the upper panel 16 is located below the upper surfaces of the pair of left and right rocker constituent members 12. Note that the upper panel 16 is detachably mounted to the pair of left and right rocker constituent members 12, the front frame 13, and the rear frame 14.

The pair of left and right rocker constituent members 12, the front frame 13, the rear frame 14, and the plurality of battery cross members 15 form a framework of the battery case 10. In addition, each of the pair of left and right rocker constituent members 12 also has a function as a rocker that is a strength member of the vehicle, in a state where the battery case 10 is assembled to the underbody 20 of the vehicle. That is, the pair of left and right rocker constituent members 12 of the battery case 10 form portions of a framework of the vehicle. Note that the rockers of the vehicle each refer to a member forming a portion of the framework of the vehicle (more specifically, a portion of the underbody 20 of the vehicle), and a member that has a tubular structure (in other words, has a closed cross-sectional shape), and that is disposed on a corresponding vehicle outer side of a center floor panel 22 of the vehicle while a lengthwise direction thereof extends in a direction substantially parallel to the front-rear direction.

Moreover, the battery case 10 is formed with an internal space surrounded by the lower panel 11, the pair of left and right rocker constituent members 12, the front frame 13, the rear frame 14, and the upper panel 16. On the upper surface of the lower panel 11 in the internal space, a plurality of compartments (specifically, compartments each between the adjacent battery cross members 15 and a compartment between the rearmost battery cross member 15 and the rear frame 14) are formed by the plurality of battery cross members 15. Moreover, in each compartment, a battery (specifically, a battery module in which a plurality of battery cells are connected) can be placed (that is, can be housed in the internal space of the battery case 10).

In addition, the respective front end portions of the pair of left and right rocker constituent members 12 protrude frontward relative to the front end portion of the lower panel 11 and a front end portion (front surface) of the front frame 13. These protruding end portions may also be referred to as frontward-protruding end portions 121. Similarly, the respective rear end portions of the pair of left and right rocker constituent members 12 protrude rearward relative to the rear end portion of the lower panel 11 and a rear end portion (rear surface) of the rear frame 14. These protruding end portions may also be referred to as rearward-protruding end portions 122. The frontward-protruding end portions 121 are configured to be mountable to and detachable from a pair of left and right torque boxes 25 of the underbody 20 of the vehicle, to be described later, and the rearward-protruding end portions 122 are configured to be mountable to and detachable from a pair of left and right rear side members 28 of the underbody 20 of the vehicle, to be described later.

### (Configuration of Underbody of Vehicle)

Next, the underbody 20 of the vehicle will be described. The underbody 20 of the vehicle includes a pair of left and right rocker skin members 21, the center floor panel 22, a plurality of floor cross members 23, the pair of left and right torque boxes 25, a pair of left and right front side members 26, a front bumper reinforcement 27, the pair of left and right rear side members 28, a rear bumper reinforcement (not shown), and a rear floor panel 29.

Each of the pair of left and right rocker skin members 21 is a long member. The pair of left and right rocker skin members 21 are disposed in substantially parallel to each other, in a lower portion of the vehicle and on outer-side end portions in the vehicle width direction thereof, while a lengthwise direction of the pair of left and right rocker skin members 21 extends in a direction substantially parallel to the front-rear direction of the vehicle. Respective front end portions of the pair of left and right rocker skin members 21 are joined to the pair of respective left and right torque boxes 25. Respective rear end portions of the pair of left and right rocker skin members 21 are joined to the pair of respective left and right rear side members 28. Further, the plurality of floor cross members 23 are joined to the pair of left and right rocker skin members 21. In addition, there is a case in which respective lower end portions of a front pillar, a center pillar, and a rear pillar (these are not shown) may be joined to each of the pair of left and right rocker skin members 21.

Each of the pair of left and right rocker skin members 21 is configured to be able to cover, from an upper side, a corresponding one of the pair of left and right rocker skin members 21 of the battery case 10 mounted to the underbody 20 of the vehicle. Specifically, each of the pair of left and right rocker skin members 21 includes a vehicle-outer-side covering portion 211, an upper-side covering portion 212, and a vehicle-inner-side covering portion 213. The vehicle-outer-side covering portion 211 is a portion located at the outermost position on the vehicle outer side of the rocker skin member 21, and is a portion including a plate-shaped structure extending in the upper-lower direction and the front-rear direction and being long in the front-rear direction. The upper-side covering portion 212 is a portion located at an upper side of the rocker skin member 21. The upper-side covering portion 212 is a portion extending from an upper end (upper edge) of the vehicle-outer-side covering portion 211 toward the vehicle inner side, and includes a flat-plate-shaped structure extending in the front-rear direction and the vehicle width direction and being long in the front-rear direction. The vehicle-inner-side covering portion 213 is a portion located in an upper portion, on the vehicle inner side, of the rocker skin member 21. The vehicle-inner-side covering portion 213 is a portion including a rib-shaped structure extending from an end portion on the vehicle inner side (an edge on the vehicle inner side) of the upper-side covering portion 212 toward a lower side. Thus, each of the pair of left and right rocker skin members 21 has a shape of a substantially "inverted J" shaped cross section.

Moreover, in a state where the battery case 10 is mounted to the underbody 20 of the vehicle, the vehicle-outer-side covering portions 211 of the rocker skin members 21 are located on the respective vehicle outer sides of the pair of left and right rocker constituent members 12 (cover the vehicle outer sides), the upper-side covering portions 212 are located on the respective upper sides of the pair of left and right rocker constituent members 12 (cover the upper sides), and the vehicle-inner-side covering portions 213 are located in the vicinities of respective upper end portions on the vehicle inner sides of the pair of left and right rocker constituent members 12 (cover the vicinities of the upper end portions on the vehicle inner sides). In this manner, the underbody 20 of the vehicle is configured such that the battery case 10 can be housed between the vehicle-outer-side covering portions 211 of the pair of left and right rocker skin members 21. Moreover, the underbody 20 of the vehicle is configured to cover each of the pair of left and right rocker constituent members 12 of the battery case 10, in a state where the battery case 10 is mounted.

The center floor panel 22 is an example of a floor panel of the present invention. The center floor panel 22 is a member forming a floor of a vehicle cabin, and has a plate-shaped structure extending in a substantially horizontal direction. In addition, the center floor panel 22 has a substantially quadrilateral shape as viewed in the upper-lower direction. Both left and right end portions (both left and right edges) of the center floor panel 22 are respectively joined to the pair of left and right rocker skin members 21. Moreover, an upper surface of the center floor panel 22 is located at a position lower than upper surfaces of the pair of left and right rocker skin members 21. For example, the center floor panel 22 is joined to lower end portions (lower edges) of the vehicle-inner-side covering portions 213 of the pair of left and right rocker skin members 21 or the vicinity thereof.

Each of the plurality of floor cross members 23 is a long bar-shaped member having a substantially hat-shaped cross section, and is disposed on an upper side of the center floor panel 22, while a lengthwise direction of each of the plurality of floor cross members 23 extends in a direction substantially parallel to the vehicle width direction. In the present embodiment, the plurality of floor cross members 23 are members to which a seat of the vehicle is mounted. Note that in the plurality of floor cross members 23, a member to which the seat of the vehicle is mounted may also be referred to as a "seat cross member". Moreover, a lower end portion (lower surface) of the floor cross member 23 is joined (fixed) to the center floor panel 22, and end portions, on the vehicle outer sides in the lengthwise direction, of the floor cross member 23 are joined (fixed) to the left and right rocker skin members 21. In addition, the lower surface of the floor cross member 23 is located below the upper-side covering portions 212 of the pair of left and right rocker skin members 21, and an upper surface of the floor cross member 23 is located above the upper-side covering portions 212 of the pair of left and right rocker skin members 21. Note that the upper surface of the floor cross member 23 may be set at a position at the same height as the height of the upper-side covering portions 212 of the rocker skin members 21 or at a position below the upper-side covering portions 212.

Note that FIG. 1 shows a configuration in which the underbody 20 of the vehicle includes a center frame 24 located substantially at the center in the vehicle width direction and extending in the front-rear direction. In this case, end portions, on the vehicle inner side, of the plurality of floor cross members 23 are joined to the center frame 24. However, the configuration of the underbody 20 of the vehicle is not limited to such a configuration, and the underbody 20 of the vehicle need not include the center frame 24. In this case, both end portions in the lengthwise direction of the plurality of floor cross members 23 are respectively joined to the pair of left and right rocker skin members 21. In other words, in this case, the plurality of floor cross members 23 are disposed to connect the pair of left and right rocker skin members 21.

Each of the pair of left and right torque boxes 25 is a member through which a corresponding one of the pair of left and right rocker constituent members 12 of the battery case 10 mounted to the underbody 20 of the vehicle and a corresponding one of the pair of left and right front side members 26 are coupled. Each of the pair of left and right torque boxes 25 is disposed on the front side of a corresponding one of the pair of left and right rocker skin members 21, and is joined to the corresponding one of the pair of left and right rocker skin members 21. In the present embodiment, each of the pair of left and right torque boxes 25 is made of aluminum or an aluminum alloy, and is manufactured by die casting. The pair of left and right torque boxes 25 include respective mounting portions 60 configured to detachably join (fix) the respective frontward-protruding end portions 121 of the pair of left and right rocker constituent members 12 of the battery case 10. Note that the mounting portion 60 will be described later.

The pair of left and right front side members 26 are long tubular members. The pair of left and right front side members 26 are disposed to be spaced apart from each other in the left-right direction, while a lengthwise direction thereof extends in a direction substantially parallel to the front-rear direction. Moreover, respective rear end portions of the pair of left and right front side members 26 are joined to the pair of respective left and right torque boxes 25. Respective front end portions of the pair of left and right front side members 26 are joined to the front bumper reinforcement 27. In addition, each of a pair of left and right suspension towers (not shown) is joined to a corresponding one of the pair of left and right front side members 26. The pair of left and right suspension towers are configured to be able to house suspensions (mechanisms including shock absorbers and coil springs) of the left and right front wheels.

The front bumper reinforcement 27 is disposed on the rear side of a front bumper (not shown), and is configured to receive a load applied to the front bumper (a force toward the rear of the vehicle) and transmit the received load to the pair of left and right front side members 26. The front bumper reinforcement 27 is a bar-shaped member, and is disposed while a lengthwise direction thereof extends in a direction substantially parallel to the vehicle width direction.

Each of the pair of left and right rear side members 28 is a member through which a corresponding one of the pair of left and right rocker constituent members 12 of the battery case 10 and the rear bumper reinforcement (not shown) are coupled. The pair of left and right rear side members 28 are disposed on the rear side of the pair of left and right rocker skin members 21, and are joined to the respective front end portions of the pair of left and right rocker skin members 21. Respective rear end portions of the pair of left and right rear side members 28 are joined to the rear bumper reinforcement. The rear bumper reinforcement is a long bar-shaped member, and is disposed on the front side of a rear bumper (not shown), while a lengthwise direction of the rear bumper reinforcement extends in a direction substantially parallel to the vehicle width direction. Moreover, the rear bumper reinforcement is configured to receive a load in the front-rear direction applied to the rear bumper and transmit the received load to the pair of left and right rear side members 28.

In this manner, in a front portion of the underbody 20 of the vehicle, the front bumper reinforcement 27, the pair of left and right front side members 26, and the pair of left and right torque boxes 25 are disposed. Each of these members is a strength member (a member forming the framework of the vehicle body) that receives a load applied to the front bumper. In addition, in a rear portion of the underbody 20 of the vehicle, the rear bumper reinforcement and the pair of left and right rear side members 28 are disposed. Each of these members is a strength member that receives a load applied to the rear bumper. Therefore, it can be said that "the underbody 20 of the vehicle includes a vehicle body front portion structure including the front bumper reinforcement 27, the pair of left and right front side members 26, and the pair of left and right torque boxes 25". In addition, it can be said that "the underbody 20 of the vehicle includes a vehicle body rear portion structure including the rear bumper reinforcement and the pair of left and right rear side members 28".

The rear floor panel 29 is a member forming a floor of a trunk, and has a plate-shaped structure extending in the substantially horizontal direction. Each of both side ends, in the vehicle width direction, of the rear floor panel 29 is joined to a corresponding one of the pair of left and right rear side members 28. In addition, a front end portion of the rear floor panel 29 is joined to a rear end portion of the center floor panel 22.

The underbody 20 of the vehicle according to the present embodiment does not include a conventional pair of left and right rockers integrally joined to other strength members, but includes the pair of left and right rocker skin members 21 instead of the conventional pair of left and right rockers. Note that the configurations of the torque box 25, the front side member 26, the front bumper reinforcement 27, the rear side member 28, the rear bumper reinforcement, and the rear floor panel 29 are not limited, and conventionally known configurations can be applied.

In this manner, the underbody 20 of the vehicle is configured to be able to house the battery case 10 on the lower side of the center floor panel 22 and the upper-side covering portions 212 of the pair of left and right rocker skin members 21 and between the vehicle-outer-side covering portions 211 of the pair of left and right rocker skin members 21.

### (Structure for Assembling Battery Case to Underbody of Vehicle)

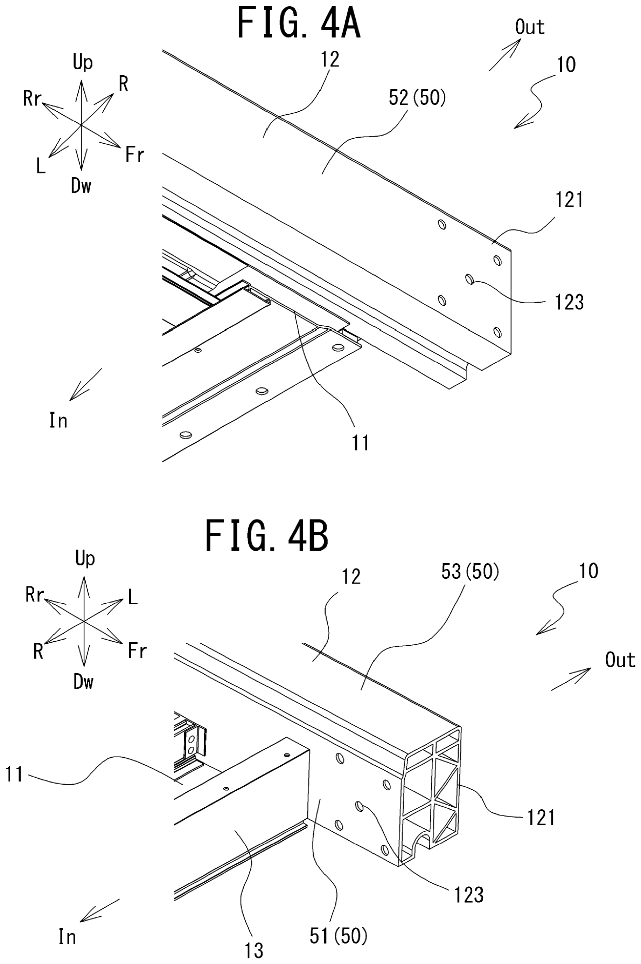

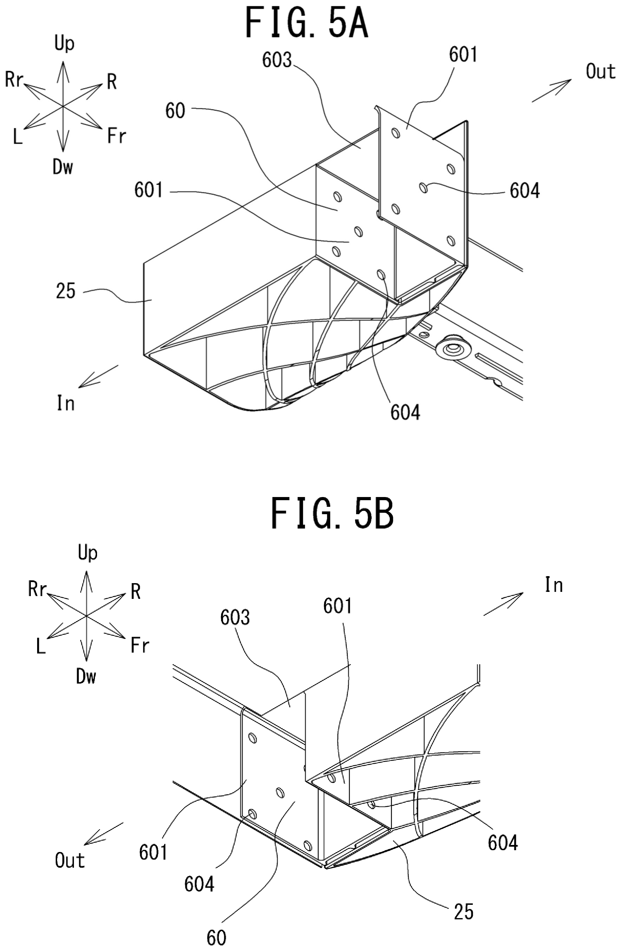

Next, a structure for assembling the battery case 10 to the underbody 20 of the vehicle will be described. FIGS. 4A and 4B are perspective views each showing a configuration of the frontward-protruding end portion 121 of the rocker constituent member 12. Note that FIG. 4A is a view as viewed from obliquely below on the vehicle outer side, and FIG. 4B is a view as viewed from obliquely above on the vehicle inner side. FIGS. 5A and 5B are perspective views each showing a configuration of the mounting portion 60 provided in the torque box 25. Note that FIG. 5A is a view as viewed from obliquely below on the vehicle outer side, and FIG. 5B is a view as viewed from obliquely below on the vehicle inner side.

As shown in FIGS. 4A and 4B, the rocker constituent member 12 includes a vehicle-inner-side wall portion 51 and a vehicle-outer-side wall portion 52 located on the vehicle outer side thereof. Both the vehicle-inner-side wall portion 51 and the vehicle-outer-side wall portion 52 are plate-shaped portions extending in the front-rear direction and the upper-lower direction (erected substantially vertically), and are provided in substantially parallel to each other, while being spaced apart from each other in the vehicle width direction. Moreover, the vehicle-outer-side wall portion 52 and the vehicle-inner-side wall portion 51 in the frontward-protruding end portion 121 are provided with screw holes 123 through which screws can be screwed and whose respective axes are substantially parallel to the vehicle width direction. In this manner, the plurality of screw holes 123 (in each of the drawings, an example is shown in which the screw holes 123 are provided at five locations) are provided in each of a surface, on the vehicle inner side, and a surface, on the vehicle outer side, of the frontward-protruding end portion 121.

As shown in FIGS. 5A and 5B, the pair of left and right torque boxes 25 are provided with the mounting portions 60. The mounting portions 60 are configured to be able to receive the respective frontward-protruding end portions 121 of the pair of left and right rocker constituent members 12, and are configured to be able to fix the respective frontward-protruding end portions 121 of the pair of left and right rocker constituent members 12 in a state of receiving them. Specifically, each of the mounting portions 60 includes a vehicle-inner-side mounting wall portion 601 and a vehicle-outer-side mounting wall portion 602 located on the vehicle outer side thereof. The vehicle-inner-side mounting wall portion 601 and the vehicle-outer-side mounting wall portion 602 are plate-shaped portions erected substantially vertically, and are provided substantially parallel to each other at a predetermined distance in the vehicle width direction. Further, each of the mounting portions 60 includes an upper-side mounting wall portion 603 provided to connect upper end portions (upper edges) of the vehicle-inner-side mounting wall portion 601 and the vehicle-outer-side mounting wall portion 602, in order to secure strength. Note that the mounting portion 60 is opened at the lower side and the rear side to receive the frontward-protruding end portion 121 from the lower side. Thus, the mounting portion 60 has a substantially "inverted U" shape whose lower side is opened as viewed in the front-rear direction. Moreover, the mounting portion 60 can receive the frontward-protruding end portion 121 of the rocker constituent member 12 between the vehicle-inner-side mounting wall portion 601 and the vehicle-outer-side mounting wall portion 602.

The vehicle-outer-side mounting wall portion 602 and the vehicle-inner-side mounting wall portion 601 are provided with screw insertion holes 604 through which screws for fixing the frontward-protruding end portion 121 of the rocker constituent member 12 can be inserted. Moreover, the frontward-protruding end portion 121 of the rocker constituent member 12 is inserted into the mounting portion 60 (received between the vehicle-outer-side mounting wall portion 602 and the vehicle-inner-side mounting wall portion 601 of the mounting portion 60) from the lower side, and in this state, the frontward-protruding end portion 121 is screwed from both the vehicle outer side of the vehicle-outer-side mounting wall portion 602 and the vehicle inner side of the vehicle-inner-side mounting wall portion 601. That is, the vehicle-inner-side wall portion 51 of the frontward-protruding end portion 121 of each of the pair of left and right rocker constituent members 12 is screwed to the vehicle-inner-side mounting wall portion 601 of the mounting portion 60, and the vehicle-outer-side wall portion 52 of the frontward-protruding end portion 121 is screwed to the vehicle-outer-side mounting wall portion 602 of the mounting portion 60. Thus, the frontward-protruding end portion 121 and the mounting portion 60 are joined to each other. That is, the rocker constituent member 12 is joined to the torque box 25. In this manner, the frontward-protruding end portion 121 is detachably joined to the mounting portion 60 of the torque box 25, with the screws that penetrate the vehicle-inner-side mounting wall portion 601 from the inner side in the vehicle width direction of the vehicle-inner-side mounting wall portion 601 and that are screwed to the vehicle-inner-side wall portion 51 (a portion on which a vehicle-inner-side surface of the frontward-protruding end portion 121 is provided), and the screws that penetrate the vehicle-outer-side mounting wall portion 602 from the outer side in the vehicle width direction of the vehicle-outer-side mounting wall portion 602 and that are screwed to the vehicle-outer-side wall portion 52 (a portion on which a vehicle-outer-side surface of the frontward-protruding end portion 121 is provided).

Respective mounting portions 281 of the pair of left and right rear side members 28 are configured to be able to receive the respective rearward-protruding end portions 122 of the pair of left and right rocker constituent members 12, and are configured to be able to fix the respective rearward-protruding end portions 122 of the pair of left and right rocker constituent members 12 in a state of receiving them. Note that the rearward-protruding end portions 122 of the pair of left and right rocker constituent members 12 have structures substantially symmetrical to the structures of the frontward-protruding end portions 121, in the front-rear direction. In addition, the respective mounting portions 281 provided in the pair of left and right rear side members 28 have structures substantially symmetrical to the structures of the mounting portions 60 provided in the pair of left and right torque boxes 25, in the front-rear direction. Thus, description will be omitted regarding the configurations of the rearward-protruding end portion 122 of the rocker constituent member 12 and the mounting portion 281 of each of the pair of left and right rear side members 28. Moreover, the rearward-protruding end portion 122 of the rocker constituent member 12 is inserted into the mounting portion 281 from the lower side, and in this state, the rearward-protruding end portion 122 is screwed from both the vehicle outer side of the vehicle-outer-side mounting wall portion 602 and the vehicle inner side of the vehicle-inner-side mounting wall portion 601. Thus, the rearward-protruding end portion 122 and the mounting portion 281 are joined to each other. That is, the rocker constituent member 12 is joined to the rear side member 28. In this manner, the rearward-protruding end portion 122 is detachably joined to the mounting portion 281 of the rear side member 28, with the screws that penetrate the vehicle-inner-side mounting wall portion 601 from the inner side in the vehicle width direction of the vehicle-inner-side mounting wall portion 601 and that are screwed to the vehicle-inner-side wall portion 51 (a portion on which a vehicle-inner-side surface of the frontward-protruding end portion 121 is provided), and the screws that penetrate the vehicle-outer-side mounting wall portion 602 from the outer side in the vehicle width direction of the vehicle-outer-side mounting wall portion 602 and that are screwed to the vehicle-outer-side wall portion 52 (a portion on which a vehicle-outer-side surface of the frontward-protruding end portion 121 is provided).

As described above, the battery case 10 according to the present embodiment includes the tubular rocker constituent member 12, and the frontward-protruding end portion 121 of the rocker constituent member 12 (that is, the front end portion of the rocker constituent member 12) and the rearward-protruding end portion 122 of the rocker constituent member 12 (that is, the rear end portion of the rocker constituent member 12) are joined to the torque box 25 and the rear side member 28, respectively. The torque box 25 is a member included in the vehicle body front portion structure, and is a strength member that receives a load applied from the front. In addition, the rear side member 28 is a member included in the vehicle body rear portion structure, and is a strength member that receives a load applied from the rear.

According to such a configuration, each of the pair of left and right rocker constituent members 12 of the battery case 10 has a function as a rocker of the underbody 20 of the vehicle. That is, when an object collides with the front side of the vehicle, a load due to the collision is transmitted to the pair of left and right torque boxes 25 via the front bumper, the front bumper reinforcement 27, and the pair of left and right front side members 26. Then, since the front end portions of the pair of left and right rocker constituent members 12 are fastened to the torque boxes 25, the load applied to the torque boxes 25 is received by the pair of left and right rocker constituent members 12. In this manner, a load applied from the front of the vehicle is transmitted to the pair of left and right rocker constituent members 12 via the vehicle body front portion structure. According to such a configuration, a load applied from the front of the vehicle is transmitted to the pair of rocker constituent members 12 via the vehicle body front portion structure.

On the other hand, when an object collides with the rear side of the vehicle, a load due to the collision is transmitted to the rear side members 28 via the rear bumper and the rear bumper reinforcement. Then, since the rear end portions of the pair of left and right rocker constituent members 12 are joined to the rear side members 28, the load applied to the rear side members 28 is received by the pair of left and right rocker constituent members 12. In this manner, a load applied from the rear of the vehicle is transmitted to the pair of left and right rocker constituent members 12 via the vehicle body rear portion structure. Moreover, the load transmitted to the rear side members 28 is received by the pair of left and right rocker constituent members 12. In this manner, a load from the rear is also transmitted to the pair of left and right rocker constituent members 12.

Then, by the pair of left and right rocker constituent members 12 receiving the load (compressive load) in the front-rear direction (by the pair of left and right rocker constituent members 12 being not deformed when receiving the load), compressive deformation in the front-rear direction of the vehicle cabin (cabin) on the upper side of the rocker constituent members 12 is prevented or reduced. According to such a configuration, the pair of tubular rocker constituent members 12 provided on both side ends, in the vehicle width direction, of the lower panel 11 are joined to the vehicle body front portion structure (the left and right torque boxes 25) and the vehicle body rear portion structure (the left and right rear side members 28), whereby the pair of rocker constituent members 12 form rockers of the vehicle body and also serve as side frames of the battery case 10. In other words, the side frames of the battery case 10 are formed by the rockers. Thus, the battery placed on the placement surface 111 of the lower panel 11 between the pair of left and right rocker constituent members 12 can be protected from loads from the front and the rear. In addition, according to the present embodiment, since the pair of left and right rocker constituent members 12 function as rockers of the vehicle body, the underbody 20 of the vehicle need not include a conventional rocker integrated with other strength members.

Accordingly, as compared with a conventional configuration in which a rocker of an underbody of a vehicle and a side frame of a battery case are arranged side by side in the vehicle width direction, there is no need to secure a space for disposing the side frame. Thus, it is possible to expand the internal space of the battery case 10 (the placement surface 111 of the lower panel 11) in the vehicle width direction. Therefore, it is possible to increase a driving battery mounting capacity. As a result, it is possible to further increase a driving range of the vehicle using electric power supplied from the battery as a power source.

Further, in the present embodiment, both sides, in the vehicle width direction, of each of the frontward-protruding end portion 121 and the rearward-protruding end portion 122 of each of the pair of left and right rocker constituent members 12 are fixed to a corresponding one of the torque box 25 and the rear side member 28 with the screws. That is, surfaces provided to be spaced apart from each other in the vehicle width direction (a vehicle-outer-side surface facing the outer side in the vehicle width direction and a vehicle-inner-side surface facing the inner side in the vehicle width direction, which are surfaces opposite to each other) of each of the frontward-protruding end portion 121 and the rearward-protruding end portion 122 are joined to a corresponding one of the vehicle body front portion structure and the vehicle body rear portion structure. With such a configuration, as compared with a configuration in which only one side in the vehicle width direction is fixed with screws, it is possible to enhance joining strength between the rocker constituent member 12 and each of the torque box 25 and the rear side member 28. Thus, it is possible to enhance rigidity (for example, rigidity against torsion about the vehicle front-rear direction) of the underbody 20 of the vehicle. Further, in the case of the configuration in which the battery case 10 is fastened with screws, it is possible to easily perform maintenance (replacement, repair, or the like) of the battery and the battery case 10 by detaching the battery case 10 from the underbody 20 of the vehicle.

In addition, according to the present embodiment, by covering each of the pair of rocker constituent members 12 from above with a corresponding one of the rocker skin members 21 provided to connect (provided to couple) the vehicle body front portion structure and the vehicle body rear portion structure, the rocker skin member 21 and the rocker constituent member 12 can be made of dissimilar metals. Thus, for example, the rocker skin member 21 can be made of a steel plate, and the rocker constituent member 12 can be made of aluminum or an aluminum alloy. Moreover, with such a configuration, for example, a vehicle body component such as a pillar can be welded and joined to the rocker skin member 21, and the rocker constituent member 12 can be made of aluminum or the like, thereby enabling reduction in weight of the battery case 10.

In addition, by joining vehicle body components (components joined to the underbody 20 of the vehicle, or components forming the underbody 20 of the vehicle) such as pillars to the rocker skin member 21, these vehicle body components need not be directly joined to each of the pair of left and right rocker constituent members 12. In other words, other vehicle body components can be indirectly joined to the pair of left and right rocker constituent members 12 through the rocker skin members 21. With such a configuration, at the time of mounting the battery case 10 to the underbody 20 of the vehicle, it is unnecessary to perform a process of joining the rocker constituent member 12 of the battery case 10 and these vehicle body members. In addition, with such a configuration, the battery case 10 is separable from these vehicle body members.

### (Configuration of Rocker Constituent Member)

Next, a configuration of the rocker constituent member 12 will be described. When a side collision or the like occurs in the vehicle (when a load from the vehicle outer side toward the vehicle inner side is applied), the rocker constituent member 12 is configured to transmit the load due to the side collision to the battery cross member 15 and the floor cross member 23, and is configured to be able to absorb energy due to the side collision or the like by being compressively deformed in the vehicle width direction.

FIG. 6 is a cross-sectional view showing a configuration of the rocker constituent member 12. As shown in FIG. 6, the rocker constituent member 12 includes an outer frame portion 50 having a tubular structure having a substantially quadrilateral cross section and extending in the front-rear direction, and a plate-shaped intermediate vertical plate portion 55 formed inside the outer frame portion 50 and extending in the front-rear direction and the upper-lower direction (erected substantially vertically). The outer frame portion 50 includes the vehicle-inner-side wall portion 51 located on the vehicle inner side, the vehicle-outer-side wall portion 52 located on the vehicle outer side relative to the vehicle-inner-side wall portion 51, an upper wall portion 53 connecting respective upper end portions (upper edges) of the vehicle-inner-side wall portion 51 and the vehicle-outer-side wall portion 52, and a lower wall portion 54 connecting respective lower end portions (lower edges) of the vehicle-inner-side wall portion 51 and the vehicle-outer-side wall portion 52.

The vehicle-inner-side wall portion 51 and the vehicle-outer-side wall portion 52 are portions having respective plate-shaped structures erected substantially vertically, and the upper wall portion 53 and the lower wall portion 54 are portions having respective plate-shaped structures extending in the vehicle width direction and the front-rear direction (that is, extending in the substantially horizontal direction). Moreover, an upper end portion (upper edge) of the intermediate vertical plate portion 55 is joined to the upper wall portion 53, and a lower end portion (lower edge) of the intermediate vertical plate portion 55 is joined to the lower wall portion 54. Note that the lower wall portion 54 is provided with a temperature control fluid passage receiving portion 543. The temperature control fluid passage receiving portion 543 is a portion formed to be able to receive a passage member 18 (for example, a pipe-shaped member) for feeding a temperature control fluid to the temperature control fluid passage 112 provided in the lower panel 11, and has a groove-shaped structure extending in the front-rear direction and opened at the lower side. With such a configuration, the passage member 18 can be disposed not to protrude from a lower surface of the lower wall portion 54, and thus this does not lead to an increase in the dimension in the upper-lower method of the battery case 10.

The upper wall portion 53 includes a vehicle-inner-side upper wall portion 531 forming a portion on the vehicle inner side relative to a joined position of the upper wall portion 53 with the intermediate vertical plate portion 55, and a vehicle-outer-side upper wall portion 532 forming a portion on the vehicle outer side relative to the joined position of the upper wall portion 53 with the intermediate vertical plate portion 55. Similarly, the lower wall portion 54 includes a vehicle-inner-side lower wall portion 541 forming a portion on the vehicle inner side relative to a joined position of the lower wall portion 54 with the intermediate vertical plate portion 55, and a vehicle-outer-side lower wall portion 542 forming a portion on the vehicle outer side relative to the joined position of the lower wall portion 54 with the intermediate vertical plate portion 55. Thus, it can be said that the internal space of the outer frame portion 50 is partitioned by the intermediate vertical plate portion 55 into a vehicle-inner-side space 501 located on the vehicle inner side relative to the intermediate vertical plate portion 55 and a vehicle-outer-side space 502 located on the vehicle outer side relative to the intermediate vertical plate portion 55.

Inside the vehicle-inner-side space 501, a plurality of vehicle-inner-side lateral plate portions 56 connecting the intermediate vertical plate portion 55 and the vehicle-inner-side wall portion 51 are provided. Specifically, the plurality of vehicle-inner-side lateral plate portions 56 include a first vehicle-inner-side lateral plate portion 561 and a second vehicle-inner-side lateral plate portion 562 located below the first vehicle-inner-side lateral plate portion 561. Each of the first vehicle-inner-side lateral plate portion 561 and the second vehicle-inner-side lateral plate portion 562 is a plate-shaped portion extending in the substantially horizontal direction. Moreover, respective end portions, on the vehicle outer side, of the first vehicle-inner-side lateral plate portion 561 and the second vehicle-inner-side lateral plate portion 562 are joined to the intermediate vertical plate portion 55, and respective end portions, on the vehicle inner side, thereof are joined to the vehicle-inner-side wall portion 51.

The upper wall portion 53 and the first vehicle-inner-side lateral plate portion 561 are provided at positions overlapping the floor cross member 23 as viewed in the vehicle width direction, in a state where the battery case 10 is mounted to the underbody 20 of the vehicle. In other words, in a state where the battery case 10 is mounted to the underbody 20 of the vehicle, the upper wall portion 53 and the first vehicle-inner-side lateral plate portion 561 are located at positions lower than the upper surface of the floor cross member 23 and higher than the lower surface of the floor cross member 23 in the upper-lower direction. More specifically, the upper-lower direction position of an upper surface of the upper wall portion 53 may be substantially the same as the upper-lower direction position of the upper surface of the floor cross member 23. In addition, the upper-lower direction position of a lower surface of the upper wall portion 53 may be substantially the same as the upper-lower direction position of the lower surface of the floor cross member 23. Further, the upper-lower direction position of an upper surface of the first vehicle-inner-side lateral plate portion 561 may be substantially the same as the upper-lower direction position of the upper surface of the floor cross member 23. Still further, the upper-lower direction position of a lower surface of the first vehicle-inner-side lateral plate portion 561 may be substantially the same as the upper-lower direction position of the lower surface of the floor cross member 23. Note that the upper wall portion 53 may be provided at substantially the same upper-lower direction position as the upper-lower direction position of the upper surface of the floor cross member 23 as viewed in the vehicle width direction or as viewed in the front-rear direction, and the first vehicle-inner-side lateral plate portion 561 may be provided at substantially the same upper-lower direction position as the upper-lower direction position of the lower surface of the floor cross member 23 as viewed in the vehicle width direction.

The lower wall portion 54 and the second vehicle-inner-side lateral plate portion 562 are provided at positions overlapping the battery cross member 15 as viewed in the vehicle width direction, in a state where the battery case 10 is mounted to the underbody 20 of the vehicle. In other words, in a state where the battery case 10 is mounted to the underbody 20 of the vehicle, the lower wall portion 54 and the second vehicle-inner-side lateral plate portion 562 are located at positions lower than the upper surface of the battery cross member 15 and higher than the lower surface of the battery cross member 15 in the upper-lower direction. Specifically, the upper-lower direction position of an upper surface of the second vehicle-inner-side lateral plate portion 562 may be substantially the same as the upper-lower direction position of the upper surface of the battery cross member 15. In addition, the upper-lower direction position of a lower surface of the second vehicle-inner-side lateral plate portion 562 may be substantially the same as the upper-lower direction position of the lower surface of the battery cross member 15. Further, the upper-lower direction position of an upper surface of the lower wall portion 54 may be substantially the same as the upper-lower direction position of an upper surface of a portion (the flange portion of the hat shape), of the battery cross member 15, joined to the upper surface of the lower panel 11. Still further, the upper-lower direction position of the lower surface of the lower wall portion 54 may be substantially the same as the upper-lower direction position of the lower surface of the battery cross member 15. Note that in the present embodiment, the upper surface of the battery cross member 15 is located at a position lower than the lower surface of the floor cross member 23, and thus the second vehicle-inner-side lateral plate portion 562 is provided below the first vehicle-inner-side lateral plate portion 561 (in other words, between the first vehicle-inner-side lateral plate portion 561 and the lower wall portion 54 in the upper-lower direction). Note that the lower wall portion 54 may be provided such that the lower surface thereof is located at substantially the same upper-lower direction position as the upper-lower direction position of the lower surface of the battery cross member 15 as viewed in the vehicle width direction or as viewed in the front-rear direction, and the second vehicle-inner-side lateral plate portion 562 may be provided such that the upper surface thereof is located at substantially the same upper-lower direction position as the upper-lower direction position of the upper surface of the battery cross member 15 as viewed in the vehicle width direction or as viewed in the front-rear direction.

Inside the vehicle-outer-side space 502, a plurality of vehicle-outer-side lateral plate portions 57 connecting the intermediate vertical plate portion 55 and the vehicle-outer-side wall portion 52 are provided. The plurality of vehicle-outer-side lateral plate portions 57 include a first vehicle-outer-side lateral plate portion 571, a second vehicle-outer-side lateral plate portion 572, a third vehicle-outer-side lateral plate portion 573, a fourth vehicle-outer-side lateral plate portion 574, and a fifth vehicle-outer-side lateral plate portion 575. The first vehicle-outer-side lateral plate portion 571 is a plate-shaped portion extending substantially horizontally. The second vehicle-outer-side lateral plate portion 572, the third vehicle-outer-side lateral plate portion 573, the fourth vehicle-outer-side lateral plate portion 574, and the fifth vehicle-outer-side lateral plate portion 575 are plate-shaped portions extending in directions inclined in the upper-lower direction and the vehicle width direction as viewed in the front-rear direction.

Respective end portions, on the vehicle inner side, of the first vehicle-outer-side lateral plate portion 571 and the second vehicle-outer-side lateral plate portion 572 are joined to a location, in the intermediate vertical plate portion 55, where the first vehicle-inner-side lateral plate portion 561 is joined (a location where the intermediate vertical plate portion 55 and the first vehicle-inner-side lateral plate portion 561 intersect with each other). Both the first vehicle-outer-side lateral plate portion 571 and the first vehicle-inner-side lateral plate portion 561 are plate-shaped members extending substantially horizontally, and thus the first vehicle-outer-side lateral plate portion 571 and the first vehicle-inner-side lateral plate portion 561 are disposed at the same upper-lower direction position. Respective end portions, on the vehicle inner side, of the third vehicle-outer-side lateral plate portion 573 and the fourth vehicle-outer-side lateral plate portion 574 are joined to a location, in the intermediate vertical plate portion 55, where the second vehicle-inner-side lateral plate portion 562 is joined. An end portion, on the vehicle inner side, of the fifth vehicle-outer-side lateral plate portion 575 is joined to a location, in the intermediate vertical plate portion 55, where the intermediate vertical plate portion 55 is joined to the lower wall portion 54. An end portion, on the vehicle outer side, of the first vehicle-outer-side lateral plate portion 571 is joined to the vehicle-outer-side wall portion 52. In this manner, the end portions, on the vehicle inner side, of the plurality of vehicle-outer-side lateral plate portions 57 are joined to any of the end portions, on the vehicle outer side, of the vehicle-inner-side lower wall portion 541 and the plurality of vehicle-inner-side lateral plate portions 56.

Respective end portions, on the vehicle outer side, of the second vehicle-outer-side lateral plate portion 572 and the third vehicle-outer-side lateral plate portion 573 are joined to substantially the same location in the vehicle-outer-side wall portion 52. In other words, the end portion, on the vehicle outer side, of the second vehicle-outer-side lateral plate portion 572 and the end portion, on the vehicle outer side, of the third vehicle-outer-side lateral plate portion 573 are joined to each other. The upper-lower direction position of the location where the end portion, on the vehicle outer side, of the second vehicle-outer-side lateral plate portion 572 is joined to the vehicle-outer-side wall portion 52 is lower than the upper-lower direction position of the location where the end portion, on the vehicle inner side, of the second vehicle-outer-side lateral plate portion 572 is joined to the intermediate vertical plate portion 55. Thus, the second vehicle-outer-side lateral plate portion 572 is inclined such that the upper-lower direction position thereof becomes higher as approaching the vehicle inner side from the vehicle outer side. On the other hand, the upper-lower direction position of the location where the end portion, on the vehicle outer side, of the third vehicle-outer-side lateral plate portion 573 is joined to the vehicle-outer-side wall portion 52 is higher than the upper-lower direction position of the location where the end portion, on the vehicle inner side, of the third vehicle-outer-side lateral plate portion 573 is joined to the intermediate vertical plate portion 55. Thus, the third vehicle-outer-side lateral plate portion 573 is inclined such that the upper-lower direction position thereof becomes lower as approaching the vehicle inner side from the vehicle outer side.

Respective end portions, on the vehicle outer side, of the fourth vehicle-outer-side lateral plate portion 574 and the fifth vehicle-outer-side lateral plate portion 575 are joined to substantially the same location in the vehicle-outer-side wall portion 52. In other words, the end portion, on the vehicle outer side, of the fourth vehicle-outer-side lateral plate portion 574 and the end portion, on the vehicle outer side, of the fifth vehicle-outer-side lateral plate portion 575 are joined to each other. In addition, the upper-lower direction position of the location where the end portion, on the vehicle outer side, of the fourth vehicle-outer-side lateral plate portion 574 is joined to the vehicle-outer-side wall portion 52 is lower than the upper-lower direction position of the location where the end portion, on the vehicle inner side, of the fourth vehicle-outer-side lateral plate portion 574 is joined to the intermediate vertical plate portion 55. Thus, the fourth vehicle-outer-side lateral plate portion 574 is inclined such that the upper-lower direction position thereof becomes higher as approaching the vehicle inner side from the vehicle outer side. On the other hand, the upper-lower direction position of the location where the end portion, on the vehicle outer side, of the fifth vehicle-outer-side lateral plate portion 575 is joined to the vehicle-outer-side wall portion 52 is higher than the upper-lower direction position of the location where the end portion, on the vehicle inner side, of the fifth vehicle-outer-side lateral plate portion 575 is joined to the intermediate vertical plate portion 55. Thus, the fifth vehicle-outer-side lateral plate portion 575 is inclined such that the upper-lower direction position thereof becomes lower as approaching the vehicle inner side from the vehicle outer side.

Note that it can be said that "the second vehicle-outer-side lateral plate portion 572, the third vehicle-outer-side lateral plate portion 573, and the intermediate vertical plate portion 55 (more precisely, a portion of the intermediate vertical plate portion 55 between the first vehicle-inner-side lateral plate portion 561 and the second vehicle-inner-side lateral plate portion 562) are provided to form a substantially triangular shape as viewed in the front-rear direction". In this case, the intermediate vertical plate portion 55 corresponds to a base of the triangular shape, and the location where the second vehicle-outer-side lateral plate portion 572 and the third vehicle-outer-side lateral plate portion 573 are joined to each other corresponds to an apex angle of the triangular shape. Moreover, the apex angle of the triangular shape is joined to the vehicle-outer-side wall portion 52. Similarly, it can be said that "the fourth vehicle-outer-side lateral plate portion 574, the fifth vehicle-outer-side lateral plate portion 575, and the intermediate vertical plate portion 55 (more precisely, a portion of the intermediate vertical plate portion 55 between the first vehicle-inner-side lateral plate portion 561 and the second vehicle-inner-side lateral plate portion 562) are provided to form a substantially triangular shape as viewed in the front-rear direction". In this case, the intermediate vertical plate portion 55 corresponds to a base of a triangular shape, and the location where the fourth vehicle-outer-side lateral plate portion 574 and the fifth vehicle-outer-side lateral plate portion 575 are joined to each other corresponds to an apex angle of the triangular shape. Moreover, the apex angle of the triangular shape is joined to the vehicle-outer-side wall portion 52. In this manner, the vehicle-outer-side wall portion 52, the intermediate vertical plate portion 55, and the plurality of vehicle-outer-side lateral plate portions 57 form a truss structure as viewed in the front-rear direction.

Moreover, the vehicle-inner-side upper wall portion 531, the vehicle-inner-side lower wall portion 541, and the plurality of vehicle-inner-side lateral plate portions 56 (the first vehicle-inner-side lateral plate portion 561 and the second vehicle-inner-side lateral plate portion 562) form the vehicle-inner-side energy absorption portion 401. In addition, the vehicle-outer-side upper wall portion 532, the vehicle-outer-side lower wall portion 542, and the plurality of vehicle-outer-side lateral plate portions 57 (the first vehicle-outer-side lateral plate portion 571, the second vehicle-outer-side lateral plate portion 572, the third vehicle-outer-side lateral plate portion 573, the fourth vehicle-outer-side lateral plate portion 574, and the fifth vehicle-outer-side lateral plate portion 575) form the vehicle-outer-side energy absorption portion 402. In this manner, in the present embodiment, the portions, of the rocker constituent member 12, on the vehicle outer side relative to the intermediate vertical plate portion 55 form the vehicle-outer-side energy absorption portion 402, and the portions, of the rocker constituent member 12, on the vehicle inner side relative to the intermediate vertical plate portion 55 form the vehicle-inner-side energy absorption portion 401. In other words, the rocker constituent member 12 includes the two energy absorption portions 401, 402 arranged in the vehicle width direction.

The vehicle-outer-side energy absorption portion 402 and the vehicle-inner-side energy absorption portion 401 are portions configured to absorb, when a side collision or the like occurs in the vehicle, energy of an impact load due to the side collision by being compressively deformed in the vehicle width direction. In the present embodiment, the vehicle-outer-side energy absorption portion 402 is configured to be less compressively deformable in the vehicle width direction (have higher rigidity against compressive deformation in the vehicle width direction) than the vehicle-inner-side energy absorption portion 401. Specifically, the number of the plurality of vehicle-outer-side lateral plate portions 57 included in the vehicle-outer-side energy absorption portion 402 is larger than the number of the plurality of vehicle-inner-side lateral plate portions 56 included in the vehicle-inner-side energy absorption portion 401. According to such a configuration, the vehicle-outer-side energy absorption portion 402 is less compressively deformable in the vehicle width direction than the vehicle-inner-side energy absorption portion 401. Note that it can also be said that "the density of a material forming the vehicle-outer-side energy absorption portion 402 is higher than the density of a material forming the vehicle-inner-side energy absorption portion 401".

As described above, the rocker constituent member 12 includes the vehicle-outer-side energy absorption portion 402 and the vehicle-inner-side energy absorption portion 401 configured to absorb energy by being compressively deformed. According to such a configuration, when a load from the vehicle outer side toward the vehicle inner side is applied to the vehicle in which the battery case 10 is mounted, the load is absorbed by the vehicle-outer-side energy absorption portion 402 and the vehicle-inner-side energy absorption portion 401 of the rocker constituent member 12 of the battery case 10.

Moreover, the vehicle-outer-side energy absorption portion 402 (in other words, the portion, of the rocker constituent member 12, on the vehicle outer side relative to the intermediate vertical plate portion 55) is configured to be less deformable than the vehicle-inner-side energy absorption portion 401 (the portion, of the rocker constituent member 12, on the vehicle inner side relative to the intermediate vertical plate portion 55). According to such a configuration, it is possible to increase an amount of energy that can be absorbed, as compared with a configuration in which the portion, on the vehicle outer side, of the rocker constituent member 12 is more easily deformable than the portion, on the vehicle inner side, of the rocker constituent member 12. That is, in the configuration in which the vehicle-outer-side energy absorption portion 402 of the rocker constituent member 12 is more easily deformable than the vehicle-inner-side energy absorption portion 401, when an object collides with a surface, on the vehicle outer side, of the rocker constituent member 12, only a portion, of the vehicle-outer-side energy absorption portion 402, with which the object collides is deformed. In contrast, according to the present embodiment, when an object collides with the surface, on the vehicle outer side, of the rocker constituent member 12, first, the vehicle-outer-side energy absorption portion 402 presses the vehicle-inner-side energy absorption portion 401 toward the vehicle inner side while the vehicle-outer-side energy absorption portion 402 is not compressively deformed, and thus the vehicle-inner-side energy absorption portion 401 is compressively deformed in advance of the vehicle-outer-side energy absorption portion 402.

Moreover, when the vehicle-inner-side energy absorption portion 401 starts to be deformed, the vehicle-outer-side energy absorption portion 402 is not deformed. Thus, a load applied to the vehicle-outer-side energy absorption portion 402 in the undeformed state is distributed over the entire vehicle-inner-side energy absorption portion 401 (substantially entire length in the front-rear direction). Therefore, the load is also transmitted to the vehicle-inner-side energy absorption portion 401 over a wide range thereof, and the wide range of the vehicle-inner-side energy absorption portion 401 is deformed. An amount of energy absorbed by the rocker constituent member 12 increases as an amount of deformation of the rocker constituent member 12 increases. Thus, when the range over which the vehicle-inner-side energy absorption portion 401 is deformed increases (expands in the front-rear direction), the amount of energy absorbed increases. That is, the battery case 10 can efficiently absorb the load using a wider range of the vehicle-inner-side energy absorption portion 401.

Note that a ratio between the dimensions in the vehicle width direction of the vehicle-outer-side energy absorption portion 402 and the vehicle-inner-side energy absorption portion 401 is not particularly limited, but the dimension in the vehicle width direction of the vehicle-inner-side energy absorption portion 401 is preferably larger to the extent possible. This is because the amount of energy that can be absorbed can be increased as the amount of compressive deformation of the vehicle-inner-side energy absorption portion 401 is increased.

In addition, the respective end portions, on the vehicle inner side, of the first vehicle-outer-side lateral plate portion 571 and the second vehicle-outer-side lateral plate portion 572 are joined to the location, in the intermediate vertical plate portion 55, where the first vehicle-inner-side lateral plate portion 561 is joined, the respective end portions, on the vehicle inner side, of the third vehicle-outer-side lateral plate portion 573 and the fourth vehicle-outer-side lateral plate portion 574 are joined to the location, in the intermediate vertical plate portion 55, where the second vehicle-inner-side lateral plate portion 562 is joined, and the respective end portions, on the vehicle inner side, of the fifth vehicle-outer-side lateral plate portion 575 and the vehicle-inner-side lower wall portion 541 are joined to a lower end portion of the intermediate vertical plate portion 55, that is, the vicinity of the location, in the intermediate vertical plate portion 55, where the vehicle-inner-side lower wall portion 541 is joined. With such a configuration, a load applied to the vehicle-outer-side wall portion 52 is transmitted to the vehicle-inner-side upper wall portion 531 via the vehicle-outer-side upper wall portion 532, is transmitted to the first vehicle-inner-side lateral plate portion 561 via the first vehicle-outer-side lateral plate portion 571 and the second vehicle-outer-side lateral plate portion 572, is transmitted to the second vehicle-inner-side lateral plate portion 562 via the third vehicle-outer-side lateral plate portion 573 and the fourth vehicle-outer-side lateral plate portion 574, and is transmitted to the vehicle-inner-side lower wall portion 541 via the fifth vehicle-outer-side lateral plate portion 575 and the vehicle-outer-side lower wall portion 542. According to this, it is possible to reliably transmit a load applied to each of the plurality of vehicle-outer-side lateral plate portions 57 to any of the vehicle-inner-side lower wall portion 541 and the plurality of vehicle-inner-side lateral plate portions 56.

Moreover, the vehicle-inner-side upper wall portion 531 and the first vehicle-inner-side lateral plate portion 561 are provided at positions overlapping the floor cross member 23 as viewed in the vehicle width direction, and the second vehicle-inner-side lateral plate portion 562 and the vehicle-inner-side lower wall portion 541 are provided at positions overlapping the battery cross member 15 as viewed in the vehicle width direction. Thus, a load applied to each of the vehicle-inner-side upper wall portion 531 and the first vehicle-inner-side lateral plate portion 561 is directly transmitted to the floor cross member 23. In addition, a load applied to each of the second vehicle-inner-side lateral plate portion 562 and the vehicle-inner-side lower wall portion 541 is directly transmitted to the battery cross member 15. In other words, a load applied to the rocker constituent member 12 is received by the floor cross member 23 and the battery cross member 15. Note that it can also be said that such a configuration is a configuration in which "a load that cannot be absorbed by the vehicle-outer-side energy absorption portion 402 and the vehicle-inner-side energy absorption portion 401 is distributed to a path transmitting through the floor cross member 23 and a path transmitting through the battery cross member 15".

In this manner, the vehicle-inner-side energy absorption portion 401 includes the first load transmission portion that transmits a load, applied from the vehicle outer side, to the floor cross member 23, and the second load transmission portion that transmits the load, applied from the vehicle outer side, to the battery cross member 15. Specifically, the vehicle-inner-side energy absorption portion 401 includes, as the first load transmission portions, the vehicle-inner-side upper wall portion 531 and the first vehicle-inner-side lateral plate portion 561 provided at positions overlapping the floor cross member 23 as viewed in the vehicle width direction, and includes, as the second load transmission portions, the second vehicle-inner-side lateral plate portion 562 and the vehicle-inner-side lower wall portion 541 provided at positions overlapping the battery cross member 15 as viewed in the vehicle width direction.

Moreover, the floor cross member 23 and the battery cross member 15 receive a load to prevent or reduce "deformation to be thrust into the vehicle inner side" occurring in the rocker constituent member 12. Thus, when a side collision or the like occurs, it is possible to enhance an effect of preventing damage of the battery housed in the battery case 10 (specifically, damage of the battery due to contact of the deformed rocker constituent member 12 with the battery). Thus, it is possible to allow a load transmitted to the floor cross member 23 and the battery cross member 15 to be increased within a range in which deformation of the battery case 10 can be reduced, as compared with a case in which only one transmission path of the load exists, such as a case in which as the transmission path, only a path transmitting through the floor cross member 23 exists.

Therefore, even when an amount of energy absorbed by the rocker constituent member 12 is reduced, it is possible to reduce deformation of the battery case 10. That is, it is possible to form the rocker constituent member 12 to be compact. Thus, it is possible to reduce the dimension in the vehicle width direction of the rocker constituent member 12. As a result, it is possible to expand the internal space of the battery case 10 (in other words, the placement surface 111 of the lower panel 11) in the vehicle width direction. Moreover, by mounting more batteries in the expanded internal space, it is possible to further increase a driving range of the vehicle.

In addition, in the case of the configuration in which the battery case 10 functions as a rocker as in the present embodiment, the underbody 20 of the vehicle does not need a rocker or a strength member having a function of the rocker (a strength member different from the rocker). Thus, it is possible to increase the mounting space of the battery by a space equivalent to the rocker and the strength member different from the rocker. Therefore, it is possible to increase the number of batteries that can be mounted while securing the rigidity of the underbody 20 of the vehicle (without reducing the strength of the underbody 20 of the vehicle).

In addition, according to the battery case 10 in accordance with the present embodiment, since the rocker constituent member 12 includes the energy absorption portions 401, 402, it is unnecessary to secure a space for disposing the energy absorption portions 401, 402, outside the rocker constituent member 12, and it is possible to further expand, by a space equivalent to this space, the internal space of the battery case 10 (the placement surface 111 of the lower panel 11).

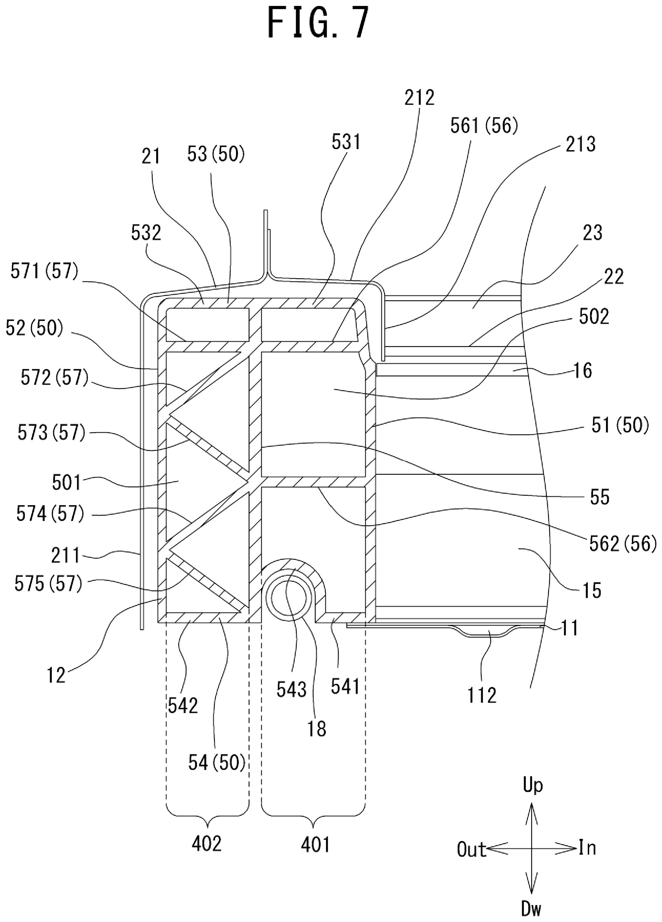

Note that in the above embodiment, an example has been shown in which the upper surface of the floor cross member 23 is located above the upper surface of the upper wall portion 53 of each of the pair of left and right rocker constituent members 12, but the configuration is not limited to such a configuration. FIG. 7 is a cross-sectional view showing configurations of an underbody 20 of a vehicle and a rocker constituent member 12 according to a modification. As shown in FIG. 7, the upper-lower direction position of an upper surface of a floor cross member 23 may be substantially the same as the upper-lower direction position of an upper surface of an upper wall portion 53 of each of the pair of left and right rocker constituent members 12.

In addition, in the above embodiment, a configuration has been shown in which each of the end portions in the lengthwise direction of the plurality of battery cross members 15 is joined to a corresponding one of the surfaces, on the vehicle inner side, of the pair of left and right rocker constituent members 12 through the mounting bracket 17. However, the configuration is not limited to such a configuration. In short, each of the end portions in the lengthwise direction of the plurality of battery cross members 15 is simply required to be joined so as to be able to receive a load in the vehicle width direction transmitted from a corresponding one of the pair of left and right rocker constituent members 12. For example, as shown in FIG. 7, each of the end portions in the lengthwise direction of the plurality of battery cross members 15 may be joined to be in direct contact with a corresponding one of the surfaces, on the vehicle inner side, of the pair of left and right rocker constituent members 12. In this case, for example, welding can be applied to the joining of the battery cross members 15 and the pair of left and right rocker constituent members 12.

In addition, in the above embodiment, the floor cross member 23 is a member to which a seat is mounted, but the floor cross member 23 is not limited to such a member. The floor cross member 23 is simply required to be any member that has a long shape extending in the vehicle width direction, that is joined to the upper surface of the center floor panel 22, and that is configured to receive a force in the vehicle width direction applied to the underbody 20 of the vehicle.

### (Summary of Embodiments)

A vehicle battery case 10 according to the present embodiment is a vehicle battery case 10 that houses a driving battery configured to supply electric power to a driving source of a vehicle, the vehicle battery case 10 including: a plate-shaped lower panel 11 that is disposed substantially horizontally below a floor panel (a center floor panel 22) of a vehicle body, the lower panel 11 including an upper surface on which the driving battery is placed; a pair of rocker constituent members 12 each joined to a corresponding one of both side ends, in a vehicle width direction, of the lower panel 11 and each formed in a tubular shape that extends in a vehicle front-rear direction, each of the pair of rocker constituent members 12 being provided with an energy absorption portion 401, 402 configured to be able to absorb energy of a load applied in a vehicle width direction; and a battery cross member 15, provided on an upper surface of the lower panel 11, that extends in a vehicle width direction, the battery cross member 15 including both ends, in a vehicle width direction, each joined to a corresponding one of respective surfaces, on an inner side in a vehicle width direction, of the pair of rocker constituent members 12. Moreover, the energy absorption portion 401, 402 includes a first load transmission portion (each of a vehicle-inner-side upper wall portion 531 and a first vehicle-inner-side lateral plate portion 561) that is provided at a position overlapping, as viewed in a vehicle width direction, a floor cross member 23 provided on the floor panel (the center floor panel 22) and extending in a vehicle width direction, and a second load transmission portion (each of a second vehicle-inner-side lateral plate portion 562 and a vehicle-inner-side lower wall portion 541) that is provided at a position overlapping, as viewed in a vehicle width direction, the battery cross member 15.

According to the present embodiment, by allowing the vehicle battery case 10 to include the rocker constituent members 12 having the configuration described above, it is possible to prevent or reduce deformation of a space for housing the battery due to a load from the outer side in the vehicle width direction even while the vehicle battery case 10 is configured without side frames, and it is also possible to expand the space for housing the battery in the vehicle width direction by configuring the vehicle battery case 10 without the side frames. Note that in the present embodiment, it can be said that "the pair of rocker constituent members 12 also serve as side frames of the vehicle battery case 10".

Specifically, the rocker constituent member 12 includes the energy absorption portions 401, 402, and the energy absorption portion 401 includes the first load transmission portion (each of a vehicle-inner-side upper wall portion 531 and a first vehicle-inner-side lateral plate portion 561) and the second load transmission portion (each of a second vehicle-inner-side lateral plate portion 562 and a vehicle-inner-side lower wall portion 541). Thus, when a load (for example, an impact load due to a side collision) is applied from the outer side in the vehicle width direction to the vehicle in which the vehicle battery case 10 according to the present embodiment is mounted, the load is absorbed by the energy absorption portions 401, 402 of the rocker constituent member 12 of the vehicle battery case 10.

Further, the first load transmission portion (each of the vehicle-inner-side upper wall portion 531 and the first vehicle-inner-side lateral plate portion 561) and the second load transmission portion (each of the second vehicle-inner-side lateral plate portion 562 and the vehicle-inner-side lower wall portion 541) are disposed to overlap the floor cross member 23 and the battery cross member 15, respectively, as viewed in the vehicle width direction. Accordingly, a load that cannot be absorbed by the energy absorption portions 401, 402 is distributed to a path transmitted from the first load transmission portion (each of the vehicle-inner-side upper wall portion 531 and the first vehicle-inner-side lateral plate portion 561) to the floor cross member 23 and a path transmitted from the second load transmission portion (each of the second vehicle-inner-side lateral plate portion 562 and the vehicle-inner-side lower wall portion 541) to the battery cross member 15. Thus, it is possible to allow a load transmitted to the floor cross member 23 and the battery cross member 15 to be increased within a range in which deformation of the vehicle battery case 10 can be reduced, as compared with a case in which only one transmission path of the load exists. Therefore, it is possible to prevent or reduce deformation of the space for housing the battery, due to a load from the outer side in the vehicle width direction.

In addition, in the case of the configuration in which the number of paths through which a load is transmitted is two, even when an amount of energy absorbed by the energy absorption portions 401, 402 of the rocker constituent member 12 is reduced as compared with the configuration in which the number of paths is one, it is possible to reduce deformation of the vehicle battery case 10. That is, it is possible to form the energy absorption portions 401, 402 to be compact. By forming the energy absorption portions 401, 402 to be compact, it is possible to reduce the dimension in the vehicle width direction of the rocker constituent member 12. In addition, according to the vehicle battery case 10 in accordance with the present embodiment, since the energy absorption portions 401, 402 are provided in the rocker constituent member 12, it is unnecessary to secure a space for disposing the energy absorption portions 401, 402, outside the rocker constituent member 12, and it is possible to further expand, by a space equivalent to this space, the housing space for the driving battery on the lower panel 11. Thus, it is possible to increase a driving battery mounting capacity.

Further, according to the present embodiment, the pair of tubular rocker constituent members 12 provided on both side ends, in the vehicle width direction, of the lower panel 11 also serve as the side frames of the vehicle battery case 10. In other words, the side frames of the vehicle battery case 10 are formed by the rockers. Accordingly, as compared with a configuration in which a rocker and a side frame are arranged side by side in the vehicle width direction, it is unnecessary to secure a space for disposing the side frame, and thus, it is possible to expand the housing space for the driving battery on the lower panel 11, in the vehicle width direction. Thus, it is possible to increase a driving battery mounting capacity. As a result, it is possible to further increase a driving range of the vehicle using electric power supplied from the driving battery as a power source. As a result, it is possible to further expand the housing space for the driving battery on the lower panel 11 in the vehicle width direction, and it is possible to further increase the driving range of the vehicle by mounting more driving batteries in the expanded housing space.

Note that a configuration can also be made such that each of the pair of rocker constituent members 12 includes an outer frame portion 50 including a vehicle-inner-side wall portion 51 that is located on an inner side in a vehicle width direction and a vehicle-outer-side wall portion 52 that is located on an outer side in a vehicle width direction relative to the vehicle-inner-side wall portion 51, the outer frame portion 50 being configured to extend with a tubular shape in a vehicle front-rear direction, and such that the first load transmission portion (each of the vehicle-inner-side upper wall portion 531 and the first vehicle-inner-side lateral plate portion 561) and the second load transmission portion (each of the second vehicle-inner-side lateral plate portion 562 and the vehicle-inner-side lower wall portion 541) include respective plate-shaped portions that extend in a vehicle front-rear direction and a vehicle width direction, and respective end portions, on an inner side in a vehicle width direction, of the respective plate-shaped portions of the first load transmission portion (each of the vehicle-inner-side upper wall portion 531 and the first vehicle-inner-side lateral plate portion 561) and the second load transmission portion (each of the second vehicle-inner-side lateral plate portion 562 and the vehicle-inner-side lower wall portion 541) are joined to the vehicle-inner-side wall portion 51.

According to this, when a load toward the inner side in the vehicle width direction is applied to a surface, on the outer side in the vehicle width direction (in other words, the vehicle-outer-side wall portion 52), of the rocker constituent member 12, it is possible to transmit the load to the floor cross member 23 via the first load transmission portion (each of the vehicle-inner-side upper wall portion 531 and the first vehicle-inner-side lateral plate portion 561) and a surface, on the inner side in the vehicle width direction (in other words, the vehicle-inner-side wall portion 51), of the rocker constituent member 12, and it is possible to transmit the load to the battery cross member 15 via the second load transmission portion (each of the second vehicle-inner-side lateral plate portion 562 and the vehicle-inner-side lower wall portion 541) and the surface, on the inner side in the vehicle width direction, of the rocker constituent member 12.

A configuration can also be made such that an upper-lower direction position of an upper surface of the first load transmission portion (each of the vehicle-inner-side upper wall portion 531 and the first vehicle-inner-side lateral plate portion 561) is configured to be substantially a same as an upper-lower direction position of an upper surface of the floor cross member 23. In addition, a configuration can also be made such that an upper-lower direction position of a lower surface of the first load transmission portion (each of the vehicle-inner-side upper wall portion 531 and the first vehicle-inner-side lateral plate portion 561) is configured to be substantially a same as an upper-lower direction position of a lower surface of the floor cross member 23. Moreover, a configuration can also be made such that an upper-lower direction position of an upper surface of the second load transmission portion (each of the second vehicle-inner-side lateral plate portion 562 and the vehicle-inner-side lower wall portion 541) is configured to be substantially a same as an upper-lower direction position of an upper surface of the battery cross member 15. Further, a configuration can also be made such that an upper-lower direction position of a lower surface of the second load transmission portion (each of the second vehicle-inner-side lateral plate portion 562 and the vehicle-inner-side lower wall portion 541) is configured to be substantially a same as an upper-lower direction position of a lower surface of the battery cross member 15.

According to these, it is possible to reliably transmit a load from the first load transmission portion (each of the vehicle-inner-side upper wall portion 531 and the first vehicle-inner-side lateral plate portion 561) to the floor cross member 23. Similarly, it is possible to reliably transmit a load from the second load transmission portion (each of the second vehicle-inner-side lateral plate portion 562 and the vehicle-inner-side lower wall portion 541) to the battery cross member 15.

In addition, a configuration can also be made such that each of the pair of rocker constituent members 12 includes a plate-shaped intermediate vertical plate portion 55, formed inside the outer frame portion 50 and between the vehicle-inner-side wall portion 51 and the vehicle-outer-side wall portion 52, that extends in a vehicle front-rear direction and an upper-lower direction, and such that respective end portions, on an outer side in a vehicle width direction, of the respective plate-shaped portions of the first load transmission portion (each of the vehicle-inner-side upper wall portion 531 and the first vehicle-inner-side lateral plate portion 561) and the second load transmission portion (each of the second vehicle-inner-side lateral plate portion 562 and the vehicle-inner-side lower wall portion 541) are joined to the intermediate vertical plate portion 55.

In this case, a configuration can also be made such that between the intermediate vertical plate portion 55 and the vehicle-outer-side wall portion 52, a plurality of vehicle-outer-side lateral plate portions 57 are provided, the plurality of vehicle-outer-side lateral plate portions 57 including respective end portions, on an outer side in a vehicle width direction, joined to the vehicle-outer-side wall portion 52, and respective end portions, on an inner side in a vehicle width direction, joined to a location where the intermediate vertical plate portion 55 and the first load transmission portion (each of the vehicle-inner-side upper wall portion 531 and the first vehicle-inner-side lateral plate portion 561) are joined to each other or a location where the intermediate vertical plate portion 55 and the second load transmission portion (each of the second vehicle-inner-side lateral plate portion 562 and the vehicle-inner-side lower wall portion 541) are joined to each other.

Further, in this case, a configuration can also be made such that each of the plurality of vehicle-outer-side lateral plate portions 57 is formed in a plate shape that extends in a vehicle front-rear direction and that extends in a direction inclined relative to an upper-lower direction and a vehicle width direction.

According to this, when a load toward the inner side in the vehicle width direction is applied to the surface, on the outer side in the vehicle width direction (in other words, the vehicle-outer-side wall portion 52), of the rocker constituent member 12, it is possible to transmit the load to the first load transmission portion (each of the vehicle-inner-side upper wall portion 531 and the first vehicle-inner-side lateral plate portion 561) and the second load transmission portion (each of the second vehicle-inner-side lateral plate portion 562 and the vehicle-inner-side lower wall portion 541) via each of the plurality of vehicle-outer-side lateral plate portions 57.

A configuration can also be made such that the pair of rocker constituent members 12 are configured to be joined to a vehicle body front portion structure (a pair of left and right torque boxes 25, a pair of left and right front side members 26, and a front bumper reinforcement 27) forming a front portion of the vehicle body at respective front-side end portions of the pair of rocker constituent members 12, and are configured to be joined to a vehicle body rear portion structure (a pair of left and right rear side members 28 and a rear floor panel 29) forming a rear portion of the vehicle body at respective rear-side end portions of the pair of rocker constituent members 12.

According to this, the pair of rocker constituent members 12 function as rockers of the vehicle.

In this case, a configuration can also be made such that the respective front-side end portions of the pair of rocker constituent members 12 are configured to be joined to a strength member (each of the pair of left and right torque boxes 25), included in the vehicle body front portion structure (the pair of left and right torque boxes 25, the pair of left and right front side members 26, and the front bumper reinforcement 27), configured to receive an impact load applied from a front, and such that the respective rear-side end portions of the pair of rocker constituent members 12 are configured to be joined to a strength member (each of the pair of left and right rear side members 28), included in the vehicle body rear portion structure (the pair of left and right rear side members 28 and the rear floor panel 29), configured to receive an impact load applied from a rear.

According to this, the impact load applied from the front of the vehicle is transmitted to the pair of rocker constituent members 12 via the vehicle body front portion structure (the pair of left and right torque boxes 25, the pair of left and right front side members 26, and the front bumper reinforcement 27), and the impact load applied from the rear of the vehicle is transmitted to the pair of rocker constituent members 12 via the vehicle body rear portion structure (the pair of left and right rear side members 28 and the rear floor panel 29). By allowing the impact loads from the front and the rear to be also transmitted to the pair of rocker constituent members 12, the battery on the lower panel 11 provided between the pair of rocker constituent members 12 can be protected from the impact loads from the front and the rear.

It can be said that the vehicle body front portion structure (the pair of left and right torque boxes 25, the pair of left and right front side members 26, and the front bumper reinforcement 27) and the vehicle body rear portion structure (the pair of left and right rear side members 28 and the rear floor panel 29) are coupled through rocker skin members 21, and that each of the rocker skin members 21 is configured to be able to cover a corresponding one of the pair of rocker constituent members 12 from above.

According to this, by covering each of the pair of rocker constituent members 12 from above with the corresponding one of the rocker skin members 21 connecting the vehicle body front portion structure (the pair of left and right torque boxes 25, the pair of left and right front side members 26, and the front bumper reinforcement 27) and the vehicle body rear portion structure (the pair of left and right rear side members 28 and the rear floor panel 29), the rocker skin member 21 and the rocker constituent member 12 can be made of dissimilar metals. Thus, for example, the rocker skin member 21 can be made of a steel plate, and the rocker constituent member 12 can be made of aluminum or an aluminum alloy. With such a configuration, for example, a vehicle body component such as a pillar can be welded and joined to the rocker skin member 21, and the rocker constituent member 12 can be made of aluminum or the like, thereby enabling reduction in weight of the vehicle battery case 10.

A vehicle battery case 10 according to the present embodiment is a vehicle battery case 10 that houses a driving battery configured to supply electric power to a driving source of a vehicle, the vehicle battery case 10 including: a plate-shaped lower panel 11 that is disposed substantially horizontally below a floor panel (a center floor panel 22) of a vehicle body, the lower panel 11 including an upper surface on which the driving battery is placed; and a pair of rocker constituent members 12 each disposed on a corresponding one of both side ends, in a vehicle width direction, of the lower panel 11, each of the pair of rocker constituent members 12 being provided with an energy absorption portion 401, 402 configured to be able to absorb energy of a load applied in a vehicle width direction. In addition, the energy absorption portion 401, 402 includes a vehicle-inner-side energy absorption portion 401, and a vehicle-outer-side energy absorption portion 402 joined to the vehicle-inner-side energy absorption portion 401 and formed on an outer side, in a vehicle width direction, relative to the vehicle-inner-side energy absorption portion 401. Moreover, the vehicle-outer-side energy absorption portion 402 is configured to be less deformable than the vehicle-inner-side energy absorption portion 401.

According to the present embodiment, the vehicle-outer-side energy absorption portion 402, forming the outer side in the vehicle width direction, of the energy absorption portions 401, 402 provided in the rocker constituent member 12 is configured to be less deformable than the vehicle-inner-side energy absorption portion 401, forming the inner side in the vehicle width direction, of the energy absorption portions 401, 402. Thus, when a load (for example, an impact load due to a side collision) is applied to the vehicle battery case 10 from the outer side in the vehicle width direction, the vehicle-inner-side energy absorption portion 401 is compressively deformed in the vehicle width direction in advance of the vehicle-outer-side energy absorption portion 402. Here, when the vehicle-inner-side energy absorption portion 401 starts to be deformed, the vehicle-outer-side energy absorption portion 402 is in an undeformed state or a less deformed state. Thus, a load applied to the vehicle-outer-side energy absorption portion 402 in the undeformed state or the less deformed state is distributed over the entire range in which the vehicle-outer-side energy absorption portion 402 is disposed, and energy due to the load is absorbed by the vehicle-inner-side energy absorption portion 401 being compressively deformed in a wide range thereof. In this manner, the load is also transmitted to the vehicle-inner-side energy absorption portion 401 over a wide range thereof, and thus it is possible to efficiently absorb the load using the wider range of the vehicle-inner-side energy absorption portion 401.

The energy that cannot be absorbed by the compressive deformation of the vehicle-inner-side energy absorption portion 401 is absorbed by compressive deformation occurring in the vehicle-outer-side energy absorption portion 402 and deformation to be thrust into the inner side in the vehicle width direction occurring in the rocker constituent member 12. However, according to the present embodiment, since the amount of energy absorbed by the vehicle-inner-side energy absorption portion 401 can be increased, it is possible to enhance an effect of preventing or reducing the deformation to be thrust into the inner side in the vehicle width direction occurring in the rocker constituent member 12. Therefore, it is possible to enhance an effect of preventing or reducing contact of the rocker constituent member 12 with the battery occurring by the rocker constituent member 12 being thrust into a space inside which the battery is placed (in other words, an effect of protecting the battery).

A configuration can also be made such that each of the pair of rocker constituent members 12 includes: an outer frame portion 50 that extends with a tubular shape in a vehicle front-rear direction; and a plate-shaped intermediate vertical plate portion 55, formed inside the outer frame portion 50, that extends in a vehicle front-rear direction and an upper-lower direction, such that the outer frame portion 50 includes a vehicle-inner-side wall portion 51 that is located on an inner side in a vehicle width direction, a vehicle-outer-side wall portion 52 that is located on an outer side in a vehicle width direction relative to the vehicle-inner-side wall portion 51, an upper wall portion 53 through which respective upper ends of the vehicle-inner-side wall portion 51 and the vehicle-outer-side wall portion 52 are joined, and a lower wall portion 54 through which respective lower ends of the vehicle-inner-side wall portion 51 and the vehicle-outer-side wall portion 52 are joined, such that an upper end of the intermediate vertical plate portion 55 is joined to the upper wall portion 53, and a lower end of the intermediate vertical plate portion 55 is joined to the lower wall portion 54, and such that a space inside the outer frame portion 50 is partitioned, by the intermediate vertical plate portion 55, into a vehicle-inner-side space 501, on an inner side in a vehicle width direction relative to the intermediate vertical plate portion 55, and a vehicle-outer-side space 502, on an outer side in a vehicle width direction relative to the intermediate vertical plate portion 55.

In this case, a configuration can also be made such that the upper wall portion 53 includes a vehicle-inner-side upper wall portion 531 that forms a portion on an inner side in both width directions relative to a joined position of the upper wall portion 53 with the intermediate vertical plate portion 55, and a vehicle-outer-side upper wall portion 532 that forms a portion on an outer side in a vehicle width direction relative to the joined position, such that the lower wall portion 54 includes a vehicle-inner-side lower wall portion 541 that forms a portion on an inner side in a vehicle width direction relative to a joined position of the lower wall portion 54 with the intermediate vertical plate portion 55, and a vehicle-outer-side lower wall portion 542 that forms a portion on an outer side in a vehicle width direction relative to the joined position, such that a plurality of vehicle-inner-side lateral plate portions 56 through which the intermediate vertical plate portion 55 and the vehicle-inner-side wall portion 51 are joined are formed inside the vehicle-inner-side space 501, such that a plurality of vehicle-outer-side lateral plate portions 57 through which the intermediate vertical plate portion 55 and the vehicle-outer-side wall portion 52 are joined are formed inside the vehicle-outer-side space 502, and such that the vehicle-inner-side energy absorption portion 401 includes the vehicle-inner-side upper wall portion 531, the vehicle-inner-side lower wall portion 541, and the plurality of vehicle-inner-side lateral plate portions 56.

Further, in this case, a configuration can also be made such that respective end portions, on an inner side in a vehicle width direction, of the plurality of vehicle-outer-side lateral plate portions 57 are joined to any of respective end portions, on an outer side in a vehicle width direction, of the plurality of vehicle-inner-side lateral plate portions 56.

According to this, it is possible to reliably transmit a load applied to each of the vehicle-outer-side lateral plate portions 57 to any of the vehicle-inner-side lateral plate portions 56.

A configuration can also be made:
such that the vehicle-inner-side energy absorption portion 401 includes the vehicle-inner-side upper wall portion 531, the vehicle-inner-side lower wall portion 541, and the plurality of vehicle-inner-side lateral plate portions 56; and
such that the vehicle-outer-side energy absorption portion 402 includes the vehicle-outer-side upper wall portion 532, the vehicle-outer-side lower wall portion 542, and the plurality of vehicle-outer-side lateral plate portions 57.

According to this, the vehicle-inner-side energy absorption portion 401 can absorb energy through deformation of the vehicle-inner-side upper wall portion 531, the vehicle-inner-side lower wall portion 541, and the plurality of vehicle-inner-side lateral plate portions 56. In addition, the vehicle-outer-side energy absorption portion 402 can absorb energy through deformation of the vehicle-outer-side upper wall portion 532, the vehicle-outer-side lower wall portion 542, and the plurality of vehicle-outer-side lateral plate portions 57.

A configuration can also be made such that a vehicle width direction dimension of the vehicle-inner-side energy absorption portion 401 is larger than a vehicle width direction dimension of the vehicle-outer-side energy absorption portion 402.

With this configuration, it is possible to increase an amount of energy that the energy absorption portions 401, 402 can absorb by being compressively deformed in the vehicle width direction.

A configuration can also be made such that a number of the plurality of vehicle-outer-side lateral plate portions 57 is larger than a number of the plurality of vehicle-inner-side lateral plate portions 56.

According to this, by causing the number of the vehicle-outer-side lateral plate portions 57 to be larger than the number of the vehicle-inner-side lateral plate portions 56, it is possible to configure the vehicle-outer-side energy absorption portion 402 to be less deformable than the vehicle-inner-side energy absorption portion 401.

A configuration can also be made such that the vehicle battery case 10 includes a battery cross member 15, provided on an upper surface of the lower panel 11, that extends in a vehicle width direction, the battery cross member 15 including both ends, in a vehicle width direction, each joined to a corresponding one of the pair of rocker constituent members 12, and such that at least a portion of the plurality of vehicle-inner-side lateral plate portions 56 (a second vehicle-inner-side lateral plate portion 562) is configured to be provided at a position overlapping the battery cross member 15, as viewed in a vehicle width direction.

Thus, a load applied to the rocker constituent member 12 from the outer side in the vehicle width direction is received by the battery cross member 15 via the vehicle-inner-side lateral plate portion 56 (the second vehicle-inner-side lateral plate portion 562) overlapping the battery cross member 15. Therefore, it is possible to prevent or reduce deformation to be thrust into the vehicle inner side occurring in the rocker constituent member 12.

A configuration can also be made such that the pair of rocker constituent members 12 are configured to be joined to a vehicle body front portion structure (a pair of left and right torque boxes 25, a pair of left and right front side members 26, and a front bumper reinforcement 27) forming a front portion of the vehicle body at respective front ends of the pair of rocker constituent members, and are configured to be joined to a vehicle body rear portion structure (a pair of left and right rear side members 28 and a rear floor panel 29) forming a rear portion of the vehicle body at respective rear ends of the pair of rocker constituent members.

According to this, the rocker constituent member 12 of the vehicle battery case 10 functions as a rocker of the vehicle body. That is, in place of a rocker, such as a conventional rocker, provided integrally with the vehicle body, the rocker constituent member 12 functions as a rocker. In addition, since the pair of rocker constituent members 12 also serve as the side frames of the vehicle battery case 10, the vehicle battery case 10 can be configured without side frames (in other words, side frames need not be provided separately from the rocker constituent members 12). Therefore, it is possible to expand the housing space for the driving battery in the vehicle width direction while securing the strength of the vehicle body.

A vehicle battery case 10 according to the present embodiment is a vehicle battery case 10 that houses a driving battery configured to supply electric power to a driving source of a vehicle, the vehicle battery case 10 including: a plate-shaped lower panel 11 that is disposed substantially horizontally below a floor panel (a center floor panel 22) of a vehicle body, the lower panel 11 including an upper surface on which the driving battery is placed; a pair of rocker constituent members 12 each joined to a corresponding one of both side ends, in a vehicle width direction, of the lower panel 11 and each formed in a tubular shape that extends in a vehicle front-rear direction, the pair of rocker constituent members 12 being configured to be joined to a vehicle body front portion structure (a pair of left and right torque boxes 25, a pair of left and right front side members 26, and a front bumper reinforcement 27) forming a front portion of the vehicle body at respective front-side end portions of the pair of rocker constituent members 12, and being configured to be joined to a vehicle body rear portion structure (a pair of left and right rear side members 28 and a rear floor panel 29) forming a rear portion of the vehicle body at respective rear-side rear ends of the pair of rocker constituent members 12, each of the pair of rocker constituent members 12 being internally provided with an energy absorption portion 401, 402 configured to be able to absorb energy of a load applied from a vehicle width direction; and a battery cross member 15, provided on an upper surface of the lower panel 11, that extends in a vehicle width direction, the battery cross member 15 including both ends, in a vehicle width direction, each joined to a corresponding one of respective surfaces, on an inner side in a vehicle width direction, of the pair of rocker constituent members 12.

According to the present embodiment, the pair of tubular rocker constituent members 12 provided on both side ends, in the vehicle width direction, of the lower panel 11 are joined to the vehicle body front portion structure (the pair of left and right torque boxes 25, the pair of left and right front side members 26, and the front bumper reinforcement 27) and the vehicle body rear portion structure (the pair of left and right rear side members 28 and the rear floor panel 29), whereby the pair of rocker constituent members 12 form rockers of the vehicle body and also serve as side frames of the vehicle battery case 10. In other words, a rocker, which is a strength member of the vehicle body, is formed by a member forming the vehicle battery case 10 (a strength member of the vehicle battery case 10). Therefore, as compared with a configuration in which a rocker and a side frame are arranged side by side in the vehicle width direction, the housing space for the driving battery inside the vehicle battery case 10 is expanded in the vehicle width direction. Thus, it is possible to increase a driving battery mounting capacity. As a result, it is possible to further increase a driving range of the vehicle that obtains driving power from a driving source driven by electric power supplied from the driving battery.

A configuration can also be made such that the vehicle battery case 10 according to the present embodiment includes a front frame 13 provided along a vehicle-front-side end of the lower panel 11 and erected from the vehicle-front-side end; and a rear frame 14 provided along a vehicle-rear-side end of the lower panel 11 and erected from the vehicle-rear-side end, such that each of the pair of rocker constituent members 12 includes a frontward-protruding end portion 121 protruding frontward relative to the front frame 13 and a rearward-protruding end portion 122 protruding rearward relative to the rear frame 14, and such that the frontward-protruding end portion 121 is configured to be joined to the vehicle body front portion structure (the pair of left and right torque boxes 25, the pair of left and right front side members 26, and the front bumper reinforcement 27), and the rearward-protruding end portion 122 is configured to be joined to the vehicle body rear portion structure (the pair of left and right rear side members 28 and the rear floor panel 29).

According to this, by providing the frontward-protruding end portion 121 and the rearward-protruding end portion 122 on the rocker constituent member 12, as compared with a configuration in which the frontward-protruding end portion 121 and the rearward-protruding end portion 122 are not provided, it is possible to increase the number of joining locations for the rocker constituent member 12 with respect to the vehicle body front portion structure (the pair of left and right torque boxes 25, the pair of left and right front side members 26, and the front bumper reinforcement 27) and the vehicle body rear portion structure (the pair of left and right rear side members 28 and the rear floor panel 29). Therefore, it is possible to enhance mounting rigidity.

A configuration can also be made such that the frontward-protruding end portion 121 and the rearward-protruding end portion 122 each include a vehicle-outer-side surface that faces an outer side in a vehicle width direction and a vehicle-inner-side surface that faces an inner side in a vehicle width direction, the vehicle-outer-side surface and the vehicle-inner-side surface being provided to be spaced apart from each other in a vehicle width direction, such that the vehicle body front portion structure (the pair of left and right torque boxes 25, the pair of left and right front side members 26, and the front bumper reinforcement 27) is configured to be joined to each of the vehicle-outer-side surface and the vehicle-inner-side surface of the frontward-protruding end portion 121 of each of the pair of rocker constituent members 12, and such that the vehicle body rear portion structure (the pair of left and right rear side members 28 and the rear floor panel 29) is configured to be joined to each of the vehicle-outer-side surface and the vehicle-inner-side surface of the rearward-protruding end portion 122 of each of the pair of rocker constituent members 12.

According to this, it is possible to join each of the frontward-protruding end portion 121 and the rearward-protruding end portion 122 of the rocker constituent member 12 to the vehicle body from the outer side and the inner side in the vehicle width direction. Thus, as compared with a configuration in which the rocker constituent member 12 is joined to the vehicle body from one side (for example, only the outer side) in the vehicle width direction, it is possible to enhance the mounting rigidity, and it is also possible to increase the rigidity of the rocker constituent member 12 against torsion by fixing the rocker constituent member 12 from both sides in the vehicle width direction.

A configuration can also be made such that the frontward-protruding end portion 121 of each of the pair of rocker constituent members 12 is configured to be detachably joined to the vehicle body front portion structure (the pair of left and right torque boxes 25, the pair of left and right front side members 26, and the front bumper reinforcement 27), and such that the rearward-protruding end portion 122 of each of the pair of rocker constituent members 12 is configured to be detachably joined to the vehicle body rear portion structure (the pair of left and right rear side members 28 and the rear floor panel 29).

In this case, a configuration can also be made as follows. The vehicle body front portion structure (the pair of left and right torque boxes 25, the pair of left and right front side members 26, and the front bumper reinforcement 27) includes a vehicle-inner-side mounting wall portion 601 that is located on an inner side in a vehicle width direction of the frontward-protruding end portion 121, and a vehicle-outer-side mounting wall portion 602 that is located on an outer side in a vehicle width direction of the frontward-protruding end portion 121. Moreover, the frontward-protruding end portion 121 is configured to be detachably joined to the vehicle body front portion structure (the pair of left and right torque boxes 25, the pair of left and right front side members 26, and the front bumper reinforcement 27), with a screw that penetrates the vehicle-inner-side mounting wall portion 601 from an inner side in a vehicle width direction of the vehicle-inner-side mounting wall portion 601 and that is screwed to the vehicle-inner-side surface, and a screw that penetrates the vehicle-outer-side mounting wall portion 602 from an outer side in a vehicle width direction of the vehicle-outer-side mounting wall portion 602 and that is screwed to the vehicle-outer-side surface. In addition, the vehicle body rear portion structure (the pair of left and right rear side members 28 and the rear floor panel 29) includes a vehicle-inner-side mounting wall portion 601 that is located on an inner side in a vehicle width direction of the rearward-protruding end portion 122, and a vehicle-outer-side mounting wall portion 602 that is located on an outer side in a vehicle width direction of the rearward-protruding end portion 122. Moreover, the rearward-protruding end portion 122 is configured to be detachably joined to the vehicle body rear portion structure (the pair of left and right rear side members 28 and the rear floor panel 29), with a screw that penetrates the vehicle-inner-side mounting wall portion 601 from an inner side in a vehicle width direction of the vehicle-inner-side mounting wall portion 601 and that is screwed to the vehicle-inner-side surface, and a screw that penetrates the vehicle-outer-side mounting wall portion 602 from an outer side in a vehicle width direction of the vehicle-outer-side mounting wall portion 602 and that is screwed to the vehicle-outer-side surface.

According to this, it is possible to easily replace the battery or easily repair the vehicle battery case 10 by detaching the vehicle battery case 10 from the vehicle body.

The vehicle battery case 10 is detachably joined to the vehicle body front portion structure (the pair of left and right torque boxes 25, the pair of left and right front side members 26, and the front bumper reinforcement 27). In addition, it is also possible to adopt a configuration in which the vehicle body rear portion structure (the pair of left and right rear side members 28 and the rear floor panel 29) and the vehicle body rear portion structure (the pair of left and right rear side members 28 and the rear floor panel 29) are coupled through rocker skin members 21, and in which each of the rocker skin members 21 is configured to be able to cover a corresponding one of the pair of rocker constituent members 12 from above.

According to this, the vehicle battery case 10 is detachably joined to the vehicle body front portion structure (the pair of left and right torque boxes 25, the pair of left and right front side members 26, and the front bumper reinforcement 27). In addition, by covering each of the pair of rocker constituent members 12 from above with the corresponding one of the rocker skin members 21 connecting the vehicle body rear portion structure (the pair of left and right rear side members 28 and the rear floor panel 29) and the vehicle body rear portion structure (the pair of left and right rear side members 28 and the rear floor panel 29), the rocker skin member 21 and the rocker constituent member 12 can be made of dissimilar metals. Thus, for example, the rocker skin member 21 can be made of a steel plate, and the rocker constituent member 12 can be made of aluminum or an aluminum alloy. With such a configuration, for example, a vehicle body component such as a pillar can be welded and joined to the rocker skin member 21, and the rocker constituent member 12 can be made of aluminum or the like, thereby enabling reduction in weight of the vehicle battery case 10.

A configuration can also be made such that the vehicle body front portion structure (the pair of left and right torque boxes 25, the pair of left and right front side members 26, and the front bumper reinforcement 27) includes a pair of left and right torque boxes 25 that are strength members configured to receive a load applied from a front of a vehicle, such that the vehicle body rear portion structure (the pair of left and right rear side members 28 and the rear floor panel 29) includes a pair of left and right rear side members 28 that are strength members configured to receive a load applied from a rear of a vehicle, and such that each of the pair of rocker constituent members 12 is configured to be joined to a corresponding one of the pair of left and right torque boxes 25 at a corresponding one of respective front-side end portions of the pair of rocker constituent members 12, and is configured to be joined to a corresponding one of the pair of left and right rear side members 28 at a corresponding one of respective rear-side end portions of the pair of rocker constituent members 12.

According to this, the load applied from the front of the vehicle is transmitted to the pair of rocker constituent members 12 via the pair of left and right torque boxes 25, and the load applied from the rear of the vehicle is transmitted to the pair of rocker constituent members 12 via the pair of left and right rear side members 28. Then, the pair of rocker constituent members 12 receive the load transmitted via the pair of left and right torque boxes 25 and the load transmitted via the pair of left and right rear side members 28. In this manner, the pair of rocker constituent members 12 form rockers of the vehicle.

Although the embodiments of the present invention have been described above, the present invention is not limited to the embodiments described above.

For example, the battery case 10 may further include a panel member provided below the lower panel 11 (such a panel member may also be referred to as a share panel). That is, the battery case 10 may have a double bottom structure.

In addition, the number of the vehicle-inner-side lateral plate portions 56 of the rocker constituent member 12 and the number of the vehicle-outer-side lateral plate portions 57 of the rocker constituent member 12 are also not limited. Moreover, a configuration has been shown in which the temperature control fluid passage receiving portion 543 is provided in the rocker constituent member 12. However, a configuration may be adopted in which the temperature control fluid passage receiving portion 543 is not provided. Further, in the above embodiments, in order to configure the vehicle-outer-side energy absorption portion 402 to be less compressively deformable in the vehicle width direction than the vehicle-inner-side energy absorption portion 401, the number of the plurality of vehicle-outer-side lateral plate portions 57 is made larger than the number of the plurality of vehicle-inner-side lateral plate portions 56. Alternatively or additionally, the thickness of each of the plurality of vehicle-outer-side lateral plate portions 57 may be made thicker than the thickness of each of the plurality of vehicle-inner-side lateral plate portions 56.
This application is a divisional application of European patent application no. 23885479.8 (the "parent application"), also published under no. EP-A-4 613 615. The original claims of the parent application are repeated below in the present specification in the form of items and form part of the content of this description of this divisional application as filed.

### [Item 1]

A vehicle battery case that houses a driving battery configured to supply electric power to a driving source of a vehicle, the vehicle battery case comprising:
a plate-shaped lower panel that is disposed substantially horizontally below a floor panel of a vehicle body, the lower panel including an upper surface on which the driving battery is placed;
a pair of rocker constituent members each joined to a corresponding one of both side ends, in a vehicle width direction, of the lower panel and each formed in a tubular shape that extends in a vehicle front-rear direction, each of the pair of rocker constituent members being provided with an energy absorption portion configured to be able to absorb energy of a load applied in a vehicle width direction; and
a battery cross member, provided on an upper surface of the lower panel, that extends in a vehicle width direction, the battery cross member including both ends, in a vehicle width direction, each joined to a corresponding one of respective surfaces, on an inner side in a vehicle width direction, of the pair of rocker constituent members,
wherein
the energy absorption portion includes a first load transmission portion that is provided at a position overlapping, as viewed in a vehicle width direction, a floor cross member provided on the floor panel and extending in a vehicle width direction, and a second load transmission portion that is provided at a position overlapping, as viewed in a vehicle width direction, the battery cross member.

### [Item 2]

The vehicle battery case according to item 1, wherein
each of the pair of rocker constituent members includes an outer frame portion including a vehicle-inner-side wall portion that is located on an inner side in a vehicle width direction and a vehicle-outer-side wall portion that is located on an outer side in a vehicle width direction relative to the vehicle-inner-side wall portion, the outer frame portion being configured to extend with a tubular shape in a vehicle front-rear direction, and
the first load transmission portion and the second load transmission portion include respective plate-shaped portions that extend in a vehicle front-rear direction and a vehicle width direction, and respective end portions, on an inner side in a vehicle width direction, of the respective plate-shaped portions of the first load transmission portion and the second load transmission portion are joined to the vehicle-inner-side wall portion.

### [Item 3]

The vehicle battery case according to item 2, wherein an upper-lower direction position of an upper surface of the first load transmission portion is configured to be substantially a same as an upper-lower direction position of an upper surface of the floor cross member.

### [Item 4]

The vehicle battery case according to item 2, wherein an upper-lower direction position of a lower surface of the first load transmission portion is configured to be substantially a same as an upper-lower direction position of a lower surface of the floor cross member.

### [Item 5]

The vehicle battery case according to item 2, wherein an upper-lower direction position of an upper surface of the second load transmission portion is configured to be substantially a same as an upper-lower direction position of an upper surface of the battery cross member.

### [Item 6]

The vehicle battery case according to item 2, wherein an upper-lower direction position of a lower surface of the second load transmission portion is configured to be substantially a same as an upper-lower direction position of a lower surface of the battery cross member.

### [Item 7]

The vehicle battery case according to item 2, wherein
each of the pair of rocker constituent members includes a plate-shaped intermediate vertical plate portion, formed inside the outer frame portion and between the vehicle-inner-side wall portion and the vehicle-outer-side wall portion, that extends in a vehicle front-rear direction and an upper-lower direction, and
respective end portions, on an outer side in a vehicle width direction, of the respective plate-shaped portions of the first load transmission portion and the second load transmission portion are joined to the intermediate vertical plate portion.

### [Item 8]

The vehicle battery case according to item 7, wherein between the intermediate vertical plate portion and the vehicle-outer-side wall portion, a plurality of vehicle-outer-side lateral plate portions are provided, the plurality of vehicle-outer-side lateral plate portions including respective end portions, on an outer side in a vehicle width direction, joined to the vehicle-outer-side wall portion, and respective end portions, on an inner side in a vehicle width direction, joined to a location where the intermediate vertical plate portion and the first load transmission portion are joined to each other or a location where the intermediate vertical plate portion and the second load transmission portion are joined to each other.

### [Item 9]

The vehicle battery case according to item 8, wherein each of the plurality of vehicle-outer-side lateral plate portions is formed in a plate shape that extends in a vehicle front-rear direction and that extends in a direction inclined relative to an upper-lower direction and a vehicle width direction.

### [Item 10]

The vehicle battery case according to item 1, wherein the pair of rocker constituent members are configured to be joined to a vehicle body front portion structure forming a front portion of the vehicle body at respective front-side end portions of the pair of rocker constituent members, and are configured to be joined to a vehicle body rear portion structure forming a rear portion of the vehicle body at respective rear-side end portions of the pair of rocker constituent members.

### [Item 11]

The vehicle battery case according to item 10, wherein
the respective front-side end portions of the pair of rocker constituent members are configured to be joined to a strength member, included in the vehicle body front portion structure, configured to receive an impact load applied from a front, and
the respective rear-side end portions of the pair of rocker constituent members are configured to be joined to a strength member, included in the vehicle body rear portion structure, configured to receive an impact load applied from a rear.

### [Item 12]

The vehicle battery case according to item 10 or 11, wherein
the vehicle body front portion structure and the vehicle body rear portion structure are coupled through rocker skin members, and
each of the rocker skin members is configured to be able to cover a corresponding one of the pair of rocker constituent members from above.

### [Item 13]

A vehicle battery case that houses a driving battery configured to supply electric power to a driving source of a vehicle, the vehicle battery case comprising:
a plate-shaped lower panel that is disposed substantially horizontally below a floor panel of a vehicle body, the lower panel including an upper surface on which the driving battery is placed; and
a pair of rocker constituent members each disposed on a corresponding one of both side ends, in a vehicle width direction, of the lower panel, each of the pair of rocker constituent members being provided with an energy absorption portion configured to be able to absorb energy of a load applied in a vehicle width direction,
wherein
the energy absorption portion includes a vehicle-inner-side energy absorption portion, and a vehicle-outer-side energy absorption portion joined to the vehicle-inner-side energy absorption portion and formed on an outer side, in a vehicle width direction, relative to the vehicle-inner-side energy absorption portion, and
the vehicle-outer-side energy absorption portion is configured to be less deformable than the vehicle-inner-side energy absorption portion.

### [Item 14]

The vehicle battery case according to item 13, wherein
each of the pair of rocker constituent members includes:
an outer frame portion that extends with a tubular shape in a vehicle front-rear direction; and
a plate-shaped intermediate vertical plate portion, formed inside the outer frame portion, that extends in a vehicle front-rear direction and an upper-lower direction,
the outer frame portion includes a vehicle-inner-side wall portion that is located on an inner side in a vehicle width direction, a vehicle-outer-side wall portion that is located on an outer side in a vehicle width direction relative to the vehicle-inner-side wall portion, an upper wall portion through which respective upper ends of the vehicle-inner-side wall portion and the vehicle-outer-side wall portion are joined, and a lower wall portion through which respective lower ends of the vehicle-inner-side wall portion and the vehicle-outer-side wall portion are joined,
an upper end of the intermediate vertical plate portion is joined to the upper wall portion, and a lower end of the intermediate vertical plate portion is joined to the lower wall portion, and
a space inside the outer frame portion is partitioned, by the intermediate vertical plate portion, into a vehicle-inner-side space, on an inner side in a vehicle width direction relative to the intermediate vertical plate portion, and a vehicle-outer-side space, on an outer side in a vehicle width direction relative to the intermediate vertical plate portion.

### [Item 15]

The vehicle battery case according to item 14, wherein
the upper wall portion includes a vehicle-inner-side upper wall portion that forms a portion on an inner side in a vehicle width direction relative to a joined position of the upper wall portion with the intermediate vertical plate portion, and a vehicle-outer-side upper wall portion that forms a portion on an outer side in a vehicle width direction relative to the joined position,
the lower wall portion includes a vehicle-inner-side lower wall portion that forms a portion on an inner side in a vehicle width direction relative to a joined position of the lower wall portion with the intermediate vertical plate portion, and a vehicle-outer-side lower wall portion that forms a portion on an outer side in a vehicle width direction relative to the joined position,
a plurality of vehicle-inner-side lateral plate portions through which the intermediate vertical plate portion and the vehicle-inner-side wall portion are joined are formed inside the vehicle-inner-side space, and
a plurality of vehicle-outer-side lateral plate portions through which the intermediate vertical plate portion and the vehicle-outer-side wall portion are joined are formed inside the vehicle-outer-side space.

### [Item 16]

The vehicle battery case according to item 15, wherein respective end portions, on an inner side in a vehicle width direction, of the plurality of vehicle-outer-side lateral plate portions are joined to any of respective end portions, on an outer side in a vehicle width direction, of the plurality of vehicle-inner-side lateral plate portions.

### [Item 17]

The vehicle battery case according to item 15, wherein
the vehicle-inner-side energy absorption portion includes the vehicle-inner-side upper wall portion, the vehicle-inner-side lower wall portion, and the plurality of vehicle-inner-side lateral plate portions, and
the vehicle-outer-side energy absorption portion includes the vehicle-outer-side upper wall portion, the vehicle-outer-side lower wall portion, and the plurality of vehicle-outer-side lateral plate portions.

### [Item 18]

The vehicle battery case according to item 17, wherein a vehicle width direction dimension of the vehicle-inner-side energy absorption portion is larger than a vehicle width direction dimension of the vehicle-outer-side energy absorption portion.

### [Item 19]

The vehicle battery case according to any one of items 15 to 18, wherein a number of the plurality of vehicle-outer-side lateral plate portions is larger than a number of the plurality of vehicle-inner-side lateral plate portions.

### [Item 20]

The vehicle battery case according to any one of items 15 to 18, further comprising a battery cross member, provided on an upper surface of the lower panel, that extends in a vehicle width direction, the battery cross member including both ends, in a vehicle width direction, each joined to a corresponding one of the pair of rocker constituent members,
wherein
at least a portion of the plurality of vehicle-inner-side lateral plate portions is configured to be provided at a position overlapping the battery cross member, as viewed in a vehicle width direction.

### [Item 21]

The vehicle battery case according to item 13, wherein the pair of rocker constituent members are configured to be joined to a vehicle body front portion structure forming a front portion of the vehicle body at respective front ends of the pair of rocker constituent members, and are configured to be joined to a vehicle body rear portion structure forming a rear portion of the vehicle body at respective rear ends of the pair of rocker constituent members.

### [Item 22]

A vehicle battery case that houses a driving battery configured to supply electric power to a driving source of a vehicle, the vehicle battery case comprising:
a plate-shaped lower panel that is disposed substantially horizontally below a floor panel of a vehicle body, the lower panel including an upper surface on which the driving battery is placed;
a pair of rocker constituent members each joined to a corresponding one of both side ends, in a vehicle width direction, of the lower panel and each formed in a tubular shape that extends in a vehicle front-rear direction, the pair of rocker constituent members being configured to be joined to a vehicle body front portion structure forming a front portion of the vehicle body at respective front-side end portions of the pair of rocker constituent members, and being configured to be joined to a vehicle body rear portion structure forming a rear portion of the vehicle body at respective rear-side rear ends of the pair of rocker constituent members, each of the pair of rocker constituent members being internally provided with an energy absorption portion configured to be able to absorb energy of a load applied from a vehicle width direction; and
a battery cross member, provided on an upper surface of the lower panel, that extends in a vehicle width direction, the battery cross member including both ends, in a vehicle width direction, each joined to a corresponding one of respective surfaces, on an inner side in a vehicle width direction, of the pair of rocker constituent members.

### [Item 23]

The vehicle battery case according to item 22, further comprising:
a front frame provided along a front-side end of the lower panel and erected from the front-side end; and
a rear frame provided along a rear-side end of the lower panel and erected from the rear-side end,
wherein
each of the pair of rocker constituent members includes a frontward-protruding end portion protruding frontward relative to the front frame and a rearward-protruding end portion protruding rearward relative to the rear frame, and
the frontward-protruding end portion is configured to be joined to the vehicle body front portion structure, and the rearward-protruding end portion is configured to be joined to the vehicle body rear portion structure.

### [Item 24]

The vehicle battery case according to item 23, wherein
the frontward-protruding end portion and the rearward-protruding end portion each include a vehicle-outer-side surface that faces an outer side in a vehicle width direction and a vehicle-inner-side surface that faces an inner side in a vehicle width direction, the vehicle-outer-side surface and the vehicle-inner-side surface being provided to be spaced apart from each other in a vehicle width direction,
the vehicle body front portion structure is configured to be joined to each of the vehicle-outer-side surface and the vehicle-inner-side surface of the frontward-protruding end portion of each of the pair of rocker constituent members, and
the vehicle body rear portion structure is configured to be joined to each of the vehicle-outer-side surface and the vehicle-inner-side surface of the rearward-protruding end portion of each of the pair of rocker constituent members.

### [Item 25]

The vehicle battery case according to item 24, wherein
the frontward-protruding end portion of each of the pair of rocker constituent members is configured to be detachably joined to the vehicle body rear portion structure, and
the rearward-protruding end portion of each of the pair of rocker constituent members is configured to be detachably joined to the vehicle body rear portion structure.

### [Item 26]

The vehicle battery case according to item 25, wherein
the vehicle body front portion structure includes a vehicle-inner-side mounting wall portion that is located on an inner side in a vehicle width direction of the frontward-protruding end portion, and a vehicle-outer-side mounting wall portion that is located on an outer side in a vehicle width direction of the frontward-protruding end portion,
the frontward-protruding end portion is configured to be detachably joined to the vehicle body front portion structure, with a screw that penetrates the vehicle-inner-side mounting wall portion from an inner side in a vehicle width direction of the vehicle-inner-side mounting wall portion and that is screwed to the vehicle-inner-side surface, and a screw that penetrates the vehicle-outer-side mounting wall portion from an outer side in a vehicle width direction of the vehicle-outer-side mounting wall portion and that is screwed to the vehicle-outer-side surface,
the vehicle body rear portion structure includes a vehicle-inner-side mounting wall portion that is located on an inner side in a vehicle width direction of the rearward-protruding end portion, and a vehicle-outer-side mounting wall portion that is located on an outer side in a vehicle width direction of the rearward-protruding end portion, and
the rearward-protruding end portion is configured to be detachably joined to the vehicle body rear portion structure, with a screw that penetrates the vehicle-inner-side mounting wall portion from an inner side in a vehicle width direction of the vehicle-inner-side mounting wall portion and that is screwed to the vehicle-inner-side surface, and a screw that penetrates the vehicle-outer-side mounting wall portion from an outer side in a vehicle width direction of the vehicle-outer-side mounting wall portion and that is screwed to the vehicle-outer-side surface.

### [Item 27]

The vehicle battery case according to item 22, wherein
the vehicle body front portion structure and the vehicle body rear portion structure are coupled through rocker skin members, and
each of the rocker skin members is configured to be able to cover a corresponding one of the pair of rocker constituent members from above.

### [Item 28]

The vehicle battery case according to item 22, wherein
the vehicle body front portion structure includes a pair of left and right torque boxes that are strength members configured to receive a load applied from a front of a vehicle,
the vehicle body rear portion structure includes a pair of left and right rear side members that are strength members configured to receive a load applied from a rear of a vehicle, and
each of the pair of rocker constituent members is configured to be joined to a corresponding one of the pair of left and right torque boxes at a corresponding one of respective front-side end portions of the pair of rocker constituent members, and is configured to be joined to a corresponding one of the pair of left and right rear side members at a corresponding one of respective rear-side end portions of the pair of rocker constituent members.

## Claims

1. A vehicle battery case (10) that houses a driving battery configured to supply electric power to a driving source of a vehicle, the vehicle battery case (10) comprising:
a plate-shaped lower panel (11) that is disposed substantially horizontally below a floor panel of a vehicle body, the lower panel (11) including an upper surface (111) on which the driving battery is placed; and
a pair of rocker constituent members (12) each disposed on a corresponding one of both side ends, in a vehicle width direction, of the lower panel (11), each of the pair of rocker constituent members (12) being provided with an energy absorption portion (401, 402) configured to be able to absorb energy of a load applied in a vehicle width direction,
wherein
the energy absorption portion (401, 402) includes a vehicle-inner-side energy absorption portion (401), and a vehicle-outer-side energy absorption portion (402) joined to the vehicle-inner-side energy absorption portion (401) and formed on an outer side, in a vehicle width direction, relative to the vehicle-inner-side energy absorption portion (401), and
the vehicle-outer-side energy absorption portion (402) is configured to be less deformable than the vehicle-inner-side energy absorption portion (401).

2. The vehicle battery case (10) according to claim 1, wherein
each of the pair of rocker constituent members (12) includes:
an outer frame portion (50) that extends with a tubular shape in a vehicle front-rear direction; and
a plate-shaped intermediate vertical plate portion (55), formed inside the outer frame portion (50), that extends in a vehicle front-rear direction and an upper-lower direction,
the outer frame portion (50) includes a vehicle-inner-side wall portion (51) that is located on an inner side in a vehicle width direction, a vehicle-outer-side wall portion (52) that is located on an outer side in a vehicle width direction relative to the vehicle-inner-side wall portion (51), an upper wall portion (53) through which respective upper ends of the vehicle-inner-side wall portion (51) and the vehicle-outer-side wall portion (52) are joined, and a lower wall portion (54) through which respective lower ends of the vehicle-inner-side wall portion (51) and the vehicle-outer-side wall portion (52) are joined,
an upper end of the intermediate vertical plate portion (55) is joined to the upper wall portion (53), and a lower end of the intermediate vertical plate portion (55) is joined to the lower wall portion (54), and
a space inside the outer frame portion (50) is partitioned, by the intermediate vertical plate portion (55), into a vehicle-inner-side space (501), on an inner side in a vehicle width direction relative to the intermediate vertical plate portion (55), and a vehicle-outer-side space (502), on an outer side in a vehicle width direction relative to the intermediate vertical plate portion (55).

3. The vehicle battery case (10) according to claim 2, wherein
the upper wall portion (53) includes a vehicle-inner-side upper wall portion (531) that forms a portion on an inner side in a vehicle width direction relative to a joined position of the upper wall portion (53) with the intermediate vertical plate portion (55), and a vehicle-outer-side upper wall portion (532) that forms a portion on an outer side in a vehicle width direction relative to the joined position,
the lower wall portion (54) includes a vehicle-inner-side lower wall portion (541) that forms a portion on an inner side in a vehicle width direction relative to a joined position of the lower wall portion (54) with the intermediate vertical plate portion (55), and a vehicle-outer-side lower wall portion (542) that forms a portion on an outer side in a vehicle width direction relative to the joined position,
a plurality of vehicle-inner-side lateral plate portions (561, 562) through which the intermediate vertical plate portion (55) and the vehicle-inner-side wall portion (51) are joined are formed inside the vehicle-inner-side space (501), and
a plurality of vehicle-outer-side lateral plate portions (571, 572, 573, 574, 575) through which the intermediate vertical plate portion (55) and the vehicle-outer-side wall portion (52) are joined are formed inside the vehicle-outer-side space (502).

4. The vehicle battery case (10) according to claim 3, wherein respective end portions, on an inner side in a vehicle width direction, of the plurality of vehicle-outer-side lateral plate portions (571, 572, 573, 574, 575) are joined to any of respective end portions, on an outer side in a vehicle width direction, of the plurality of vehicle-inner-side lateral plate portions (561, 562).

5. The vehicle battery case (10) according to claim 3, wherein
the vehicle-inner-side energy absorption portion (401) includes the vehicle-inner-side upper wall portion (531), the vehicle-inner-side lower wall portion (541), and the plurality of vehicle-inner-side lateral plate portions (561, 562), and
the vehicle-outer-side energy absorption portion (402) includes the vehicle-outer-side upper wall portion (532), the vehicle-outer-side lower wall portion (542), and the plurality of vehicle-outer-side lateral plate portions (571, 572, 573, 574, 575).

6. The vehicle battery case (10) according to claim 5, wherein a vehicle width direction dimension of the vehicle-inner-side energy absorption portion (401) is larger than a vehicle width direction dimension of the vehicle-outer-side energy absorption portion (402).

7. The vehicle battery case (10) according to any one of claims 3 to 6, wherein a number of the plurality of vehicle-outer-side lateral plate portions (571, 572, 573, 574, 575) is larger than a number of the plurality of vehicle-inner-side lateral plate portions (561, 562).

8. The vehicle battery case (10) according to any one of claims 3 to 6, further comprising a battery cross member (15), provided on an upper surface of the lower panel (11), that extends in a vehicle width direction, the battery cross member (15) including both ends, in a vehicle width direction, each joined to a corresponding one of the pair of rocker constituent members (12),
wherein
at least a portion of the plurality of vehicle-inner-side lateral plate portions (561, 562) is configured to be provided at a position overlapping the battery cross member (15), as viewed in a vehicle width direction.

9. The vehicle battery case (10) according to claim 1, wherein the pair of rocker constituent members (12) are configured to be joined to a vehicle body front portion structure (25, 26, 27) forming a front portion of the vehicle body at respective front ends of the pair of rocker constituent members (12), and are configured to be joined to a vehicle body rear portion structure (28, 29) forming a rear portion of the vehicle body at respective rear ends of the pair of rocker constituent members (12).
